# EUROPEAN PATENT APPLICATION

(11) **EP 1 139 253 A1**
(43) Date of publication of application: **04.10.2001**
(21) Application number: 01106127.2
(22) Date of filing: 13.03.2001
(51) Int. Cl.: G06F 17/60

(54) **Method and computer system for publishing information**

(30) Priority: 26.03.2000 US 536192
(71) Applicant: iUniverse. com, Inc., Campbell, CA 95008 (US)
(72) Inventor: Tam, Richard K., Monte Sereno, CA 95030 (US); Dunbar, Steve M., Santa Clara, CA 95051 (US); Nguyen, Young C., San Jose, CA 95124 (US)
(74) Representative: Kirschner, Klaus Dieter, Dipl.-Phys.

(57) **Abstract**

A method and a system take submissions of information offered for distribution or sale, combines partially or entirely at least two submissions to form a combination and distributing the combination in one or more forms. The system takes submissions from authors automatically over a network such as the Internet. Authors provide files for publication e.g., in XML files. Authors also provide the contractual terms for their publications. The system stores the submissions in two parts: content and descriptors that describe the content. On receipt of an order for distribution or sales, the system combines the contents and descriptors from at least two submissions to form a combination of the submissions. The system stores the contractual terms so that the authors are paid according to the distribution or sales of his or her publications. Customers provide their purchase orders for publications to the system. Customers can purchase publications in part or in whole as permitted by the contractual terms regarding the publications. Customers can also combine a publication with another publication or a personalized content submitted by the customers as permitted by the contractual terms regarding the publications. Customers can further select the output forms of their purchases, such as print media or electronic media, as permitted by the contractual terms regarding the publications.

## Description

The invention relates to a method and a computer system for publishing information.

The heart of every publishing house lies in the editorial function. The editor selects the books to be published, deals with the author, and is responsible for the critical reading of the typescript and seeing the book through the press. A publishing house's agreement with an author normally specifies that in consideration of certain payments the publishing house shall have the exclusive right to produce or reproduce the work in any legible form throughout the world. In many cases, however, this agreement is modified to exclude some rights depending on the bargaining power of the author or his agent. Other clauses provide for somewhat lower royalty rates on export sales and on cheap editions because of the lower profit margins.

The techniques for book promotion include travelling by salesman to booksellers. The book salesman is likely to receive a careful briefing from the home office and elaborate samples and sales aids. A supervisor prescribes the booksellers for the book salesman and checks the resulting orders against a quota. A well-run publishing house issues two or three seasonal announcement of its forthcoming books and annual catalogs of its present and past books still in print to principal booksellers and librarians. For many books, the publisher may issue prospectus for the use of booksellers and for direct. The distribution of review copies to the press is the last item in the normal program. These three steps, traveling, catalogs, and reviews are the vital elements in the machinery of book distribution and are virtually impossible to accomplish without the professional work of a publisher. The capacity of some authors to produce a quite presentable book with the help of a printer still leaves them far from their objective unless they can find a publisher to undertake its distribution.

Publishers use newspaper and periodical as the principal means of reaching the public. Originally handled entirely by the publisher's own staff, it is now not uncommon for the larger publishing houses to employ advertising agencies to prepare the copy and the general details of the campaign for an important book. While few authors consider that their books are advertised adequately and most publishers are highly doubtful whether press advertising does in fact sell books, the amounts spent in relation to sales revenue are much higher than for most other commodities, seldom less than 5 percent for new books. For more details of the modern publishing practices, please see an article entitled "Modern Publishing Practice" from Encyclopedia Britannica available from the Internet at www.britannica.com.

A method for distributing publications in accordance with the invention includes taking information (hereinafter "submissions") for publication in one or more file formats, combining partially or entirely information from at least two sources to form a new information, and transmitting the new information in one or more file formats for display in one or more of print media and electronic media. The method allows recipients of the new information to view the new information in a variety of media. The method also allows a large quantity of new books to be created from submissions or previously published submissions ("publication").

In a first embodiment, the method includes taking a purchase order from a customer. The customer can purchase a new publication ("personalized book" or "p-book") that is a combination of an existing publication (or an unpublished submission) and additional information (e.g., a corporate logo for a book to be used as promotional item) provided by the customer ("personalized content"). The customer can also purchase a new publication ("customized book" or "c-book") that is formed by combining two or more portions of existing publications. The first embodiment also allows the customer to put a personal touch on their purchases publications to increase their sentimental or aesthetic values. The first embodiment also improves the value customers derive from their purchased publications because the customers only purchase portions of publications they are interested.

In a second embodiment, the method also includes taking restrictions on distribution or sales of a submission from an author, and also taking royalty rates on submission from the author. The author can provide restrictions and/or royalty rates only for an entire submission or individually for each of several (or all) portions of the submission. The author can use the restrictions to preclude the combination of the submission with another publication or the distribution of the submission in certain form. The second embodiment allows royalty rates to be calculated for p-books and c-books. Note that the first embodiment can be used without the second embodiment and vice versa. For example, the first embodiment can be implemented without the second embodiment when a publication that is to be personalized is in public domain (e.g., Shakespeare's plays) or owned by the publisher (such as Time Warner).

In one implementation, a system of one or more computers for distributing publications includes a first subsystem ("eCommerce system") that takes submissions for publication from authors, and also purchase orders from customers. Authors provide their submissions (for publication) over a network (e.g., the Internet) via a first set of web pages ("submission web pages"). Customers browse a second set of web pages ("catalog web pages") and purchase publications via a third set of web pages ("purchase order web pages"). The three sets of web pages are all stored in the eCommerce system. After receiving a purchase order from a customer, the system formats one or more of the publications ordered by the customer according to the display medium selected by the customer. If the customer chooses a print medium such as a book, the system transmits the publication to a commercial printer to print and bind the publication as a book. This implementation thus allows printing on demand in response to orders from customers without the need for excessive inventories of books required by traditional publishing houses.

In the above-described implementation, a second subsystem ("content management system") includes a first application ("ingest engine") that identifies within each submission two types of information: content that is to be displayed, and descriptors that describe what the content is (e.g., title, chapter, or foreword). The ingest engine saves these two types of information separately in a database ("content management database"). In response to an order from a customer, a second application ("assembler") constructs a new publication from the content and the descriptors stored in the content management database. A third application ("converter") uses a file ("style sheet") that stores margins, tabs, fonts, headers, footers, and layout settings to be used to format the new publication and saves the publication in a file format compatible for display in one of one or more print media and electronic media.

In the above-described implementation, a third subsystem ("rights system") stores the restrictions (also called "rights") and royalty information of the submitted publication in a database ("rights database"). So, the rights database holds the restrictions on distribution or sales of the content and the royalty rates to all those who should receive royalty for any distribution or sales of the content.

One embodiment of the ingest engine generates a tree from a submitted publication and determines whether each node of the tree contains a content or a descriptor. If a node contains content, the ingest engine saves the content in a table of the content management database. If a node contains a descriptor, the ingest engine saves the descriptor in another table of the content management database.

One embodiment of the assembler constructs a first list ("start list") of descriptors sorted by starting positions of the content they describe, and also construct a second list ("end list") of the same descriptors but sorted by ending position of the contents they describe. Next, the assembler determines if the starting position of a descriptor from the start list is greater than, equal to, or less than the ending position of a descriptor from the end list. In the first iteration, the assembler compares two descriptors one at the beginning of the start list and another at the beginning of the end list. The assembler outputs to a file a portion of the content located before the content identified by one of the descriptors, depending on the result of the comparison. The assembler also outputs to the file one or both of the descriptors depending on the result of the comparison. The assembler further decides whether to advance to a next descriptor on the start list and/or a next descriptor on the end list for the next comparison, also depending on the result of the comparison.

Embodiments of the invention are now discribed with reference to the drawings in which:

FIG. 1 illustrates, in a block diagram, a publishing system in accordance with one embodiment of the invention.

FIG. 2 illustrates, in a block diagram, the author computer of FIG. 1.

FIG. 3 illustrates, in a block diagram, the customer computer of FIG. 1.

FIG. 4 illustrates, in a block diagram, the eCommerce system of FIG. 1 in accordance to one embodiment of the invention.

FIG. 5 illustrates, in a block diagram, the content management system and the rights management system of FIG. 1 in accordance to one embodiment of the invention.

FIG. 6 illustrates, in a flowchart, a method for repurposing publications in accordance to one embodiment of the invention.

FIG. 7 illustrates, in a flowchart, an action 100 of FIG. 6.

FIG. 8 illustrates, in a flowchart, a method for a stored procedure in the eCommerce database of FIG. 4.

FIG. 9 illustrates, in a flowchart, a method for the batch command tool of FIG. 5.

FIG. 10 illustrates, in a flowchart, a method for the ingest engine of FIG. 5.

FIGS. 11A and 11B illustrate, in a data model, the data structure of the content management database of FIG. 5.

FIG. 12 illustrates, in a flowchart, an action 200 of FIG. 6.

FIG. 13 illustrates, in a flowchart, a method for a stored procedure in the eCommerce database of FIG. 4.

FIGs. 14 and 15 illustrate, in flowcharts, methods for the assembler of FIG. 5.

FIG. 16 illustrates, in a flow chart, an action 300 of FIG. 6.

FIGs. 17A and 17B illustrate, in a data model, the data structure of the rights and royalty database of FIG. 5.

FIGS. 18A to 18I illustrate submission web pages of FIG. 4.

FIGS. 19A to 19C illustrate web pages for ordering personalized books.

FIG. 20 illustrates a web page for ordering customized books.

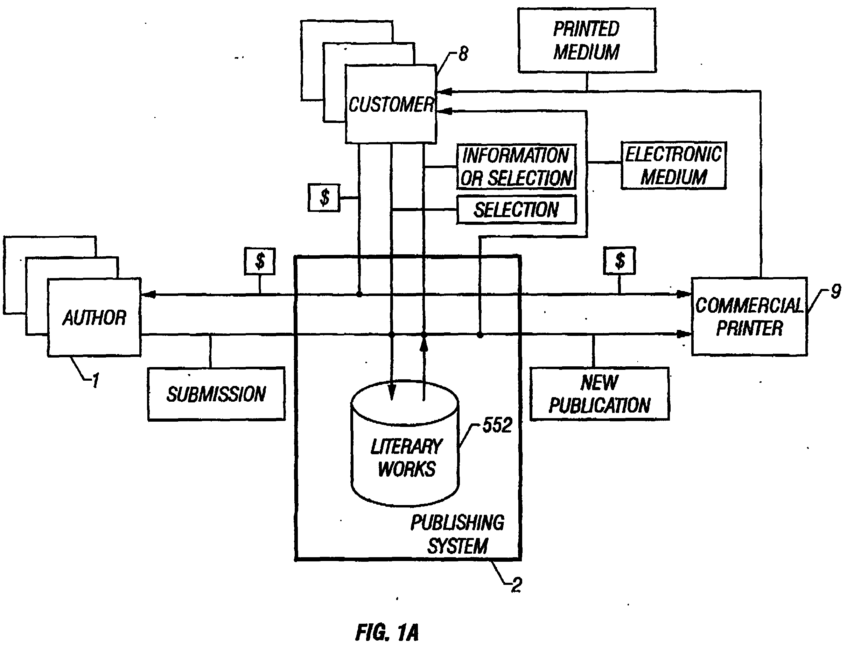

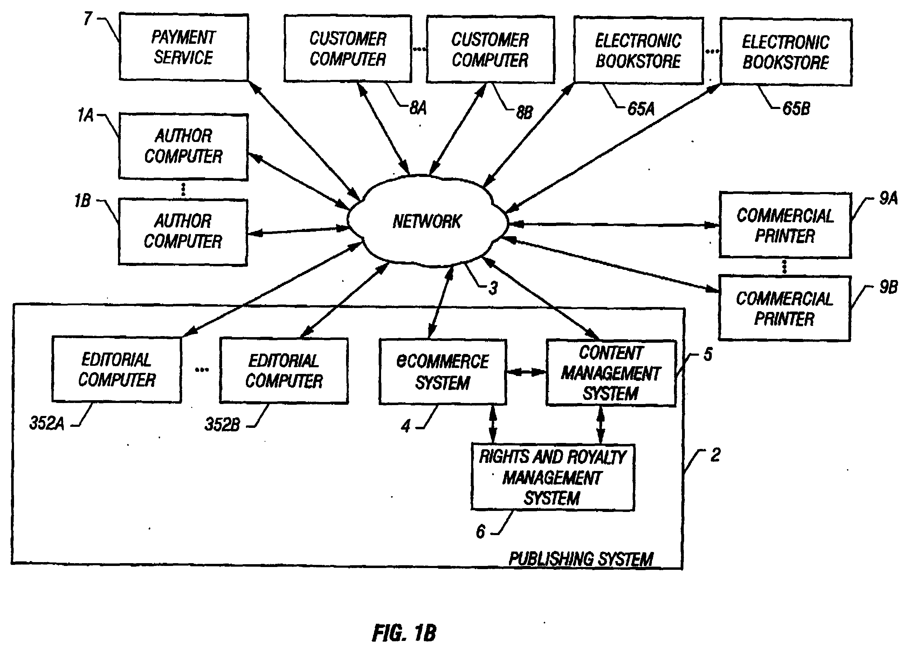

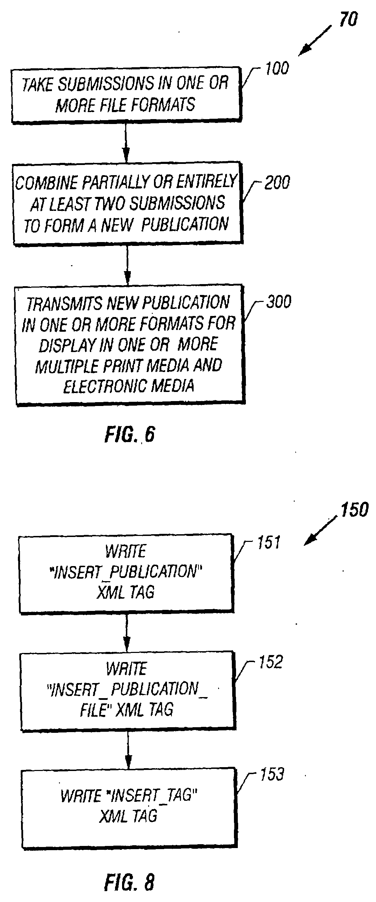

In one embodiment, a system of one or more computers (hereinafter "publishing system") 2 (FIG. 1A and 1B) distributes publications in accordance to a method 70 (FIG. 6). In an action 100, publishing system 2 takes submissions for publication in one or more file formats. The file formats include extensible markup language (XML), hypertext markup language (HTML), portable document format (PDF), and the file formats of various word processors such as Word from Microsoft Corp. of Redmond, Washington, WordPerfect from Corel Corp. of Ottawa, Canada, AppleWorks by Apple Computers Inc. of Cupertino, California, QuarkXPress from Quark Inc. of Denver, Colorado, and PageMaker from Adobe of San Jose, California. Action 100 is followed by action 200. In action 200, system 2 combines partially or entirely content from at least two or more sources to form a new publication. Action 200 is followed by action 300. In action 300, system 2 transmits the new publication in one or more file formats for display in one or more print media and electronic media. For example, system 2 may transmit a publication to a commercial printer in the postscript format and also transmit the same publication to a customer in the portable document format (PDF). Note that publications described herein are not limited to text and graphics, and include, e.g., audio and video. So an audio publication may be "displayed" on an audio cassette tape or an audio CD or DVD. An audio submission can be provided, e.g., by an author dictating the information.

As used herein, the term "display" is intended to mean presenting the new publication in a form suitable for use by a human on a display device such as a monitor/screen, a speaker/headset, or a printer. Display includes running a software program, playing a sound recording (through a speaker/headset), showing a video recording (on a monitor/screen) and printing text and/or images (on a printer).

An author transmits his or her submissions to system 2, which stores the submissions. As used herein, the term "author" is intended to include the originator of the submission, his or her authorized agent, and anyone who transmit a submission to system 2. A customer transmits to system 2 an order for at least two submissions, or a submission and a personalized content, to be combined to form a new publication. System 2 combines the submissions, or the submission and the personalized content, to form the new publication. If the customer desires the new publication in an electronic medium, system 2 prepares the new publication in the electronic medium and transmits the new publication to the customer. If the customer desires the new publication in a print medium such as a book, system 2 transmits the new publication to a commercial printer. The commercial printer prints and binds the selections as a book and ships the book to the customer. System 2 receives payment from the customer for the new publication and divides up the proceeds among system 2, the author, and the commercial printer.

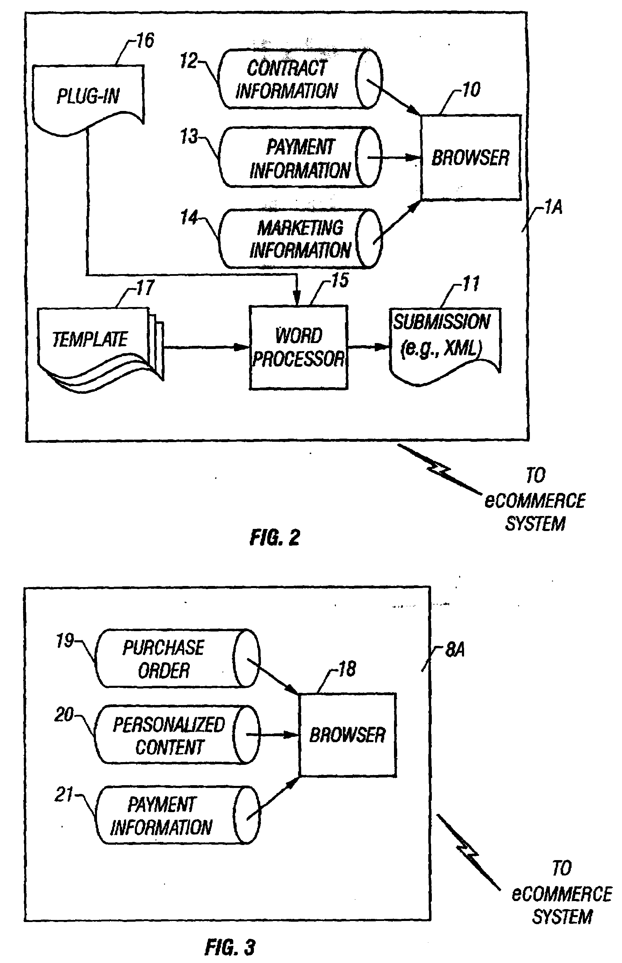

An author uses a computer 1A ("author computer") to transmit a submission 11 (FIG. 2) to a first system 4 ("eCommerce system 4") (FIG. 1) of publishing system 2. The author also uses author computer 1A to transmit information including contract information 12 (FIG. 2), payment information 13, and marketing information 14 to eCommerce system 4. Similarly, another author uses a computer 1B to submit his or her publication to publishing system 2. Alternatively, anyone can use author computers 1A and 1B to submit publications to publishing system 2. For example, a literary agent can use author computer 1A or 1B to submit a publication. As shown in FIG. 2, there can be additional author computers.

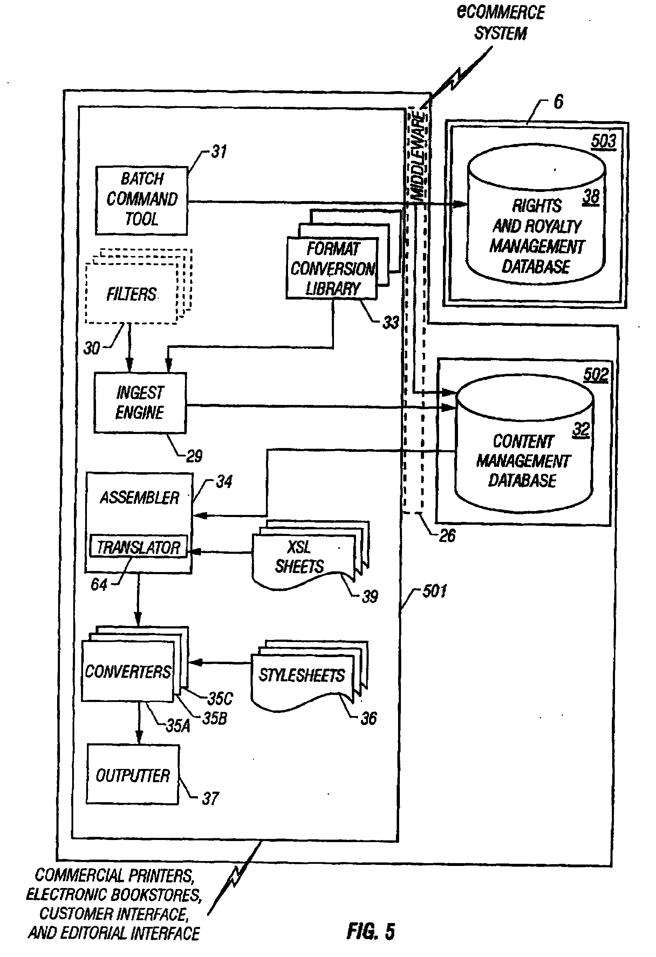

eCommerce system 4 transmits submission 11 to a content management system 5 (FIG. 1). Submission 11 includes a content (e.g., text) and descriptors that describe the content (e.g., codes that define the type of information contained in the text). Content management system 5 parses submission 11 and separately saves the content and the descriptors in a content management database 32 (FIG. 5). eCommerce system 4 transmits contract information 12 to a rights and royalty management system 6 (FIG. 1). Contract information 12 includes royalty rates of the author and zero or more restrictions on the distribution or sales of submission 11, such as language, territorial, output form restrictions, and the availability of the submission to be combined with other information including another submission. eCommerce system 4 saves payment information 13 in eCommerce database 23 and content management system 5. Payment information 13 includes a method of payment by the author for the services provided by publishing system 2 and a method of payment by publishing system 2 to the author for sales of submission 11. eCommerce system 4 saves marketing information locally and in content management system 5. Alternatively, eCommerce system 4 transmits marketing information to content management system 5, which saves the marketing information in content management database 32. eCommerce system 4 uses the marketing information to build an online catalog for customers to browse and select for purchase one or more portions of publications.

A customer uses a computer 8A ("customer computer") to browse and purchase publications (called submissions until they are published, e.g., online when made available for purchase) stored in publishing system 2 over network 3. Similarly, another customer uses a customer computer 8B to browse and purchase publications via publishing system 2. As shown in FIG. 1, there can be additional author computers.

The customer may create a personalized content 20 (FIG. 3) to be combined with a publication to form a new publication, such as a personalized book. For example, a husband combines a dedication and a book of poetry to generate a new book (which may be hard bound), as a present for his wife.

The customer may also purchase a publication either in part or in whole as permitted by the contracts between the respective authors and a business that operates publishing system 2, and if also permitted by the business rules under which publishing system 2 operates. The customer may further combine purchased publications, either in part or in whole, into a new publication, such as a customized book. For example, a professor combines portions of several books to form a book required to attend a class (also called "reader").

The customer decides the output form of his or her purchased publication. The output form of the purchased publication includes one or more of print media and electronic media. The customer decides among predefined styles provided by publishing system 2. Predefined styles generate the look and feel of the publication, such as font, font style, font size. and layout. For example, a senior citizen chooses a predefined style that has large font sizes for the ease of reading. Alternatively, content management system 5 provides a default predefined style for the customer's purchase.

To purchase a publication, the customer transmits a purchase order 19 (FIG. 3) to eCommerce system 4. eCommerce system 4 transmits purchase order 19 to content management system 5. If the customer selects an electronic medium as the output form, content management system 5 generates (i.e., manufactures) the ordered publication in the selected electronic medium and transmits the publication to customer computer 8A over network 3. If the customer selects a print medium as the output form, content management system 5 generates the publication in a file with code in a format accepted by a commercial printer 9A, and transmits the file to commercial printer 9A over network 3. Commercial printer 9A manufactures the publication in the selected print medium, such as a paperback book (e.g., prints pages and binds the printed pages), and delivers the publication to the customer or makes it available for pickup.

Similarly, content management system 5 can transmit a file of the publication to another commercial printer 9B. Commercial printers 9A and 9B include, for example, Lightning Print Inc. of La Vergne, Tennessee (www.lightningprint.com), Deharts Printing Services Corp. of Santa Clara, California (www.deharts.com), and Kinko's Inc. of Ventura, California (www.kinkos.com). As FIG. 1 shows, there can be additional commercial printers.

Content management system 5 can also transmit the file to an electronic bookstore 65A. An example of the electronic bookstore 65A is described in U.S. Patent No. 6,012,890, issued to Celorio Garrido, which is hereby incorporated by reference. Electronic bookstore 65B is similar to electronic bookstore 65A. As FIG. 1 shows, there can be additional electronic bookstores. eCommerce system 4 bills the customer for his or her purchase using a payment service 7 and rights and royalty management system 6 records the sales of the author's publication for accounting purposes.

In one embodiment, author computer 1A includes any commercially available computer. Author computer 1A includes a browser 10 (FIG. 2) such as Internet Explorer from Microsoft Corporation of Seattle, Washington ("Microsoft"), or Netscape Communicator from Netscape of Mountain View, California. An author uses browser 10 to upload submission 11 to eCommerce system 4. The author also uses browser 10 to submit contract information 12, payment information 13, and marketing information 14 to eCommerce system 4.

In one embodiment, author computer 1A includes a word processor 15 such as Word 2000 by Microsoft or WordPerfect by Corel. The author uses word processor 15 to create his or her submission 11. In one implementation, word processor 15 saves submission 11 in a self-describing format, such as extensible markup language (XML) file format. As noted elsewhere herein, information in the self-describing format includes content that is to be displayed to a customer, and one or more descriptors that described the content.

To ensure compatibility with publishing system 2, the author downloads plug-in 16 and document templates 17 for word processor 15 from eCommerce system 4. The author creates his or her submission 11 using plug-in 16 and document templates 17 in word processor 15. Document templates 17 provide predefined styles that the author uses to identify (tag) the individual sections of publication. For example, the author uses predefined styles to identify each paragraph of the publication. When the author saves submission 11 as an XML file, plug-in 16 uses the predefined styles to wrap XML tags around the individual sections of text. If submission 11 contains illustrations, plug-in 16 saves the illustrations as separate files and create XML tags with links to the illustration files within submission 11.

In one variation, document template 17 provides various predefined styles in the menu bar of word processor 15. The author highlights a section and selects a style from the menu to identify (tag) the section of the publication as a title, an author, chapters, paragraphs, drawings, and so on. The predefined styles may define the color of the text, the font of the text, the size of the font, or a combination of the description of the text that allows content management system 5 to identify each section. Alternatively, a new menu item may be added to the existing menu of word processor 15. The new menu item provides predefined styles that the author uses to identify the sections of the publication. The new menu item may be a macro for word processor 15. In one embodiment, the above-described styles are used to identify (tag) each section of the publication and not used to change the look and feel of the text. Furthermore, the levels by which the sections are identified can be defined by the human operator of publishing system 2 as broadly or as narrowly as needed. For example, a section may be as broad as the entire publication or as narrow as individual words in a publication. Author computer 1B is similar to author computer 1A.

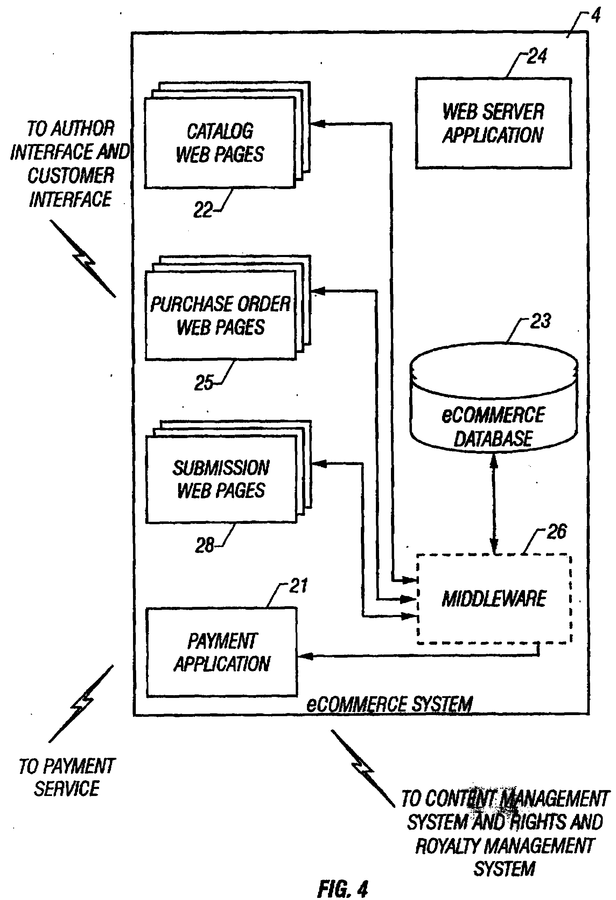

In one embodiment, customer computer 8A is a conventional computer. Customer computer 8A includes a conventional browser 18 (FIG. 3) such as Microsoft Internet Explorer or Netscape Communicator. A customer uses browser 18 to browse for catalog web pages 22 (FIG. 4) on eCommerce system 4. The customer also uses browser 18 to submit personalized content via catalog web pages 22. The customer further uses browser 18 to submit purchase orders 19 and payment information 21 via purchase order web pages 25 on eCommerce system 4. Customer computer 8B is similar to customer computer 8A.

In one implementation, eCommerce system 4 includes conventional server computers. eCommerce system 4 comprises, for example, Compaq ProLiant 1850Rs or 3000s from Compaq Computer Corp. of Houston, Texas. eCommerce system 4 (FIG. 4) includes catalog web pages 22, purchase order web pages 25, submission web pages 28, eCommerce database 23, web server application 24, and payment application 27. Catalog web pages 22, purchase order web pages 25, and submission web pages 28 are, for example, conventional active server pages supported by web server application 24. Web server application 24 is, for example, Internet Information Server from Microsoft. eCommerce database 23 is, for example, an Oracle 8i database from Oracle Corp. ("Oracle") of Redwood Shores, California. As one skilled in the art understands, the components of eCommerce system 4 may be stored in different servers.

In one implementation, catalog web pages 22, order web pages 25, and submission web pages 28 call stored procedures saved in eCommerce database 23 to generate XML batch commands (described later) to content management system 5 and rights and royalty management system 6. In another implementation, catalog web pages 22, order web pages 25, and submission web pages 28 directly call stored procedures in content management system 5 and rights and royalty management system 6 (described later).

Catalog web pages 22 form an online catalog that the customer browses for publications. Purchase order web pages 25 are web pages where the customer provides purchase order 19 and payment information 21. Purchase order web pages 25 save purchase order 19 and payment information 21 in eCommerce system 4, content management system 5, and/or rights and royalty management system 6 using XML batch commands. Purchase order web pages 25 includes a price engine that calculates the price of purchase order 19 by querying rights and royalty management system 6 and displays the price to the customer via browser 18. In one implementation, web server application 24 includes, for example, Site Server E-commerce Edition from Microsoft. Site Server provides a conventional shopping cart that stores the purchase orders for the customer while the customer browses catalog web pages 22.

A payment application 27 bills the author or the customer through payment service 7. Payment application 27 is provided by payment service 7. Payment application 27 is, for example, "Global PC Retail" available from Comerica Bank of California in Detroit, Michigan. Payment application 27 may also be used to pay the authors for sales of their publications.

Submission web pages 28 are web pages where the author uploads submission 11, contract information 12, payment information 13, and marketing information 14. Submission web pages 28 saves contract information 12, payment information 13, and marketing information 14 in eCommerce database 23. Submission web pages 28 also saves submission 11, contract information 12, payment information 13, and marketing information 14 in content management system 5 and rights and royalty management system 6 using XML batch commands or stored procedures (both described later).

In one implementation, eCommerce system 4 includes a middleware 26. In this implementation, purchase order web pages 25, submission web pages 28, and payment application 27 make calls to middleware 26 to generate commands (e.g., use middleware 26 as a transport for XML batch commands) to eCommerce database 23, content management database 32, and rights and royalty management database 38. Thus, purchase order web pages 25, submission web pages 28, and payment application 27 need not save information or files in eCommerce database 23 prior to transmitting the information and files content management database 32 or a rights and royalty database 38 (described later). Middleware 26 is, for example, BusinessWare® from Vitria Technology Inc. of Sunnyvale, California.

In one embodiment, content management system 5 and rights and royalty management system 6 are implemented in server computers, such as Enterprise 4500s from Sun Microsystems, Inc. ("Sun") of Palo Alto, California. Content management system 5 includes a batch command tool 31 that periodically executes XML batch command files. XML batch command files are XML files where batch commands to content management system 5 are nested between XML command tags. Batch command tool 31 inserts or updates tables in content management database 32 and rights and royalty database 38 (described later) according to the batch commands contained in the XML batch command files (described later).

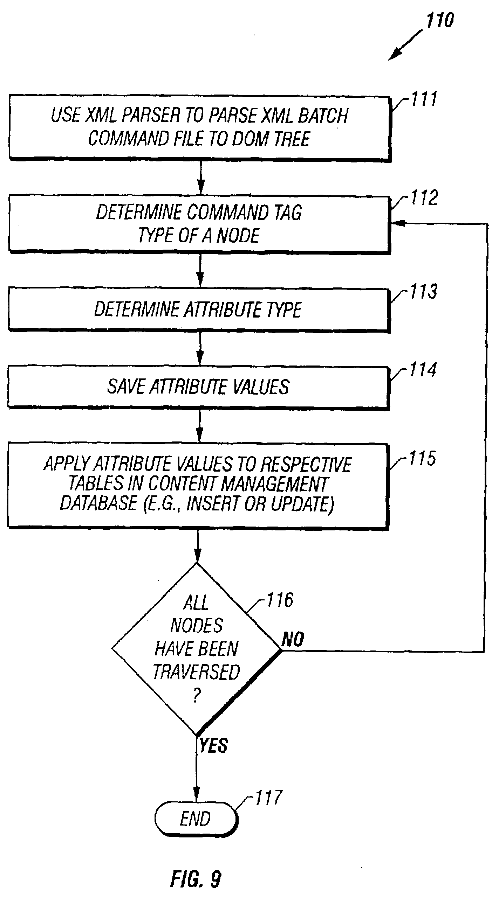

Batch command tool 31 includes an XML parser that represents each XML batch command file as a DOM (document object model) tree. The XML parser is, for example, XML Parser for Java from IBM of Armonk, New York (available from www.alphaworks.ibm.com). In accordance to a method 110 (described later in reference to FIG. 9), batch command tool 31 traverses the DOM tree structure generated by the XML parser, extracts batch commands, and insert or update tables in content management database 32 and rights and royalty database 38 (described later) according to the batch commands. Appendix B contains exemplary source code for batch command tool 31 of content management system 5.

In one implementation, if the author did not save submission 11 as an XML document, content management system 5 includes filters 30 that convert submission 11 to an XML document. Filters 30 correspond to templates 17 and word processor 15. Filters 30 convert submission 11 from various file formats, such as HTML, Word, WordPerfect, and AppleWorks, to an XML document. Filters 30 recognize the styles used by templates 17 to identify the sections of the publications and wrap corresponding XML tags around each identified section.

Content management system 5 includes an ingest engine 29 (FIG. 5) that extracts descriptors and content from submission 11. Ingest engine 29 separately saves descriptors and content in content management database 32. Content management database 32 is, for example, an Oracle 8i database. Content management database 32 includes stored procedures for inserting and updating tables. Appendix F contains a Content Management API describing the stored procedures for content management system 5. Appendix C contains exemplary source codes for the stored procedures of content management system 5.

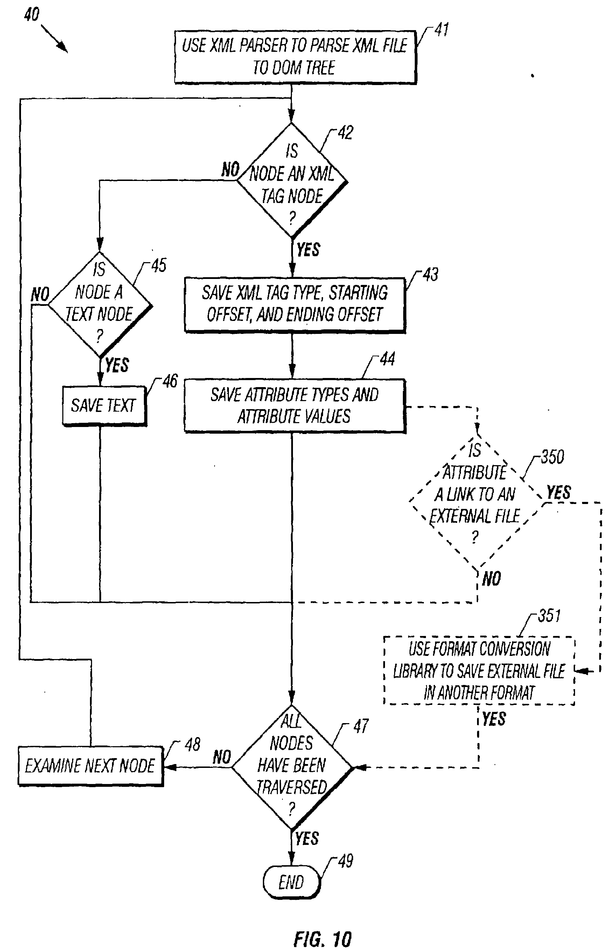

Ingest engine 29 includes an XML parser that represents submission 11 as a DOM (document object model) tree. The XML parser is, for example, the previously described XML Parser for Java from IBM. In accordance to a method 40 (described later in reference to FIG. 10), ingest engine 29 traverses the DOM tree structure generated by the XML parser, extracts content (e.g., text and images) and descriptors (e.g., XML tags), and saves content and descriptors in content management database 32.

Ingest engine 29 further includes a format conversion library 33 (e.g., a collection of format conversion programs) that stores attached files that form part of the publication (e.g., image, audio, and video files) to another format for compression and manipulation purposes. Format conversion library 33 includes an image conversion application that saves the image files linked to submission 11 in a resolution independent file format. One example of the image conversion application is "Genuine Fractals" available from Altamira Group of Burbank, California (www.altamiragroup.com). Format conversion library 33 may include other conversion applications that convert media files, such as video and audio files, to other formats for storage and manipulation.

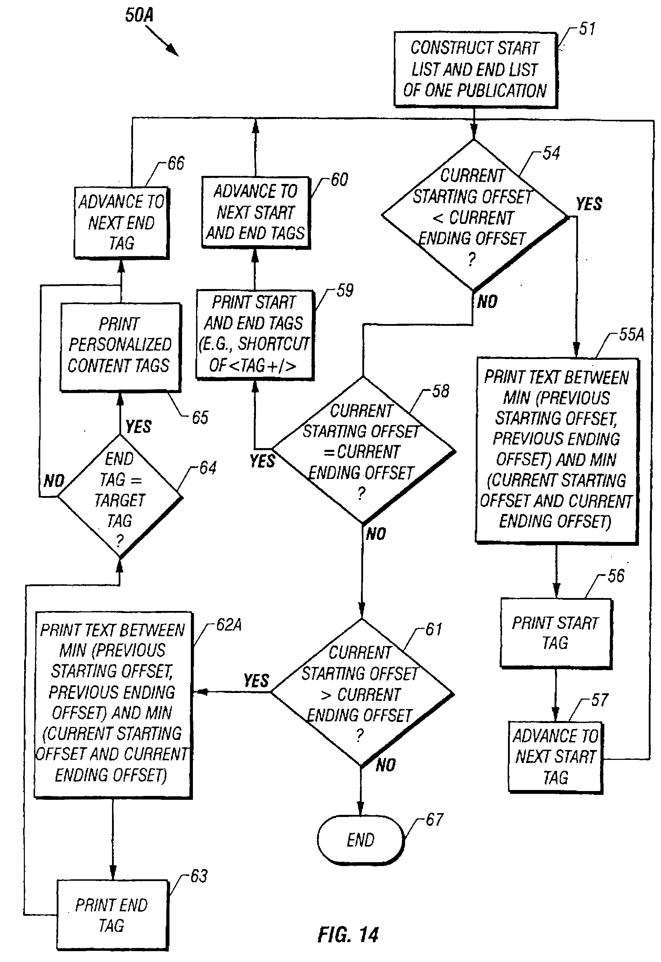

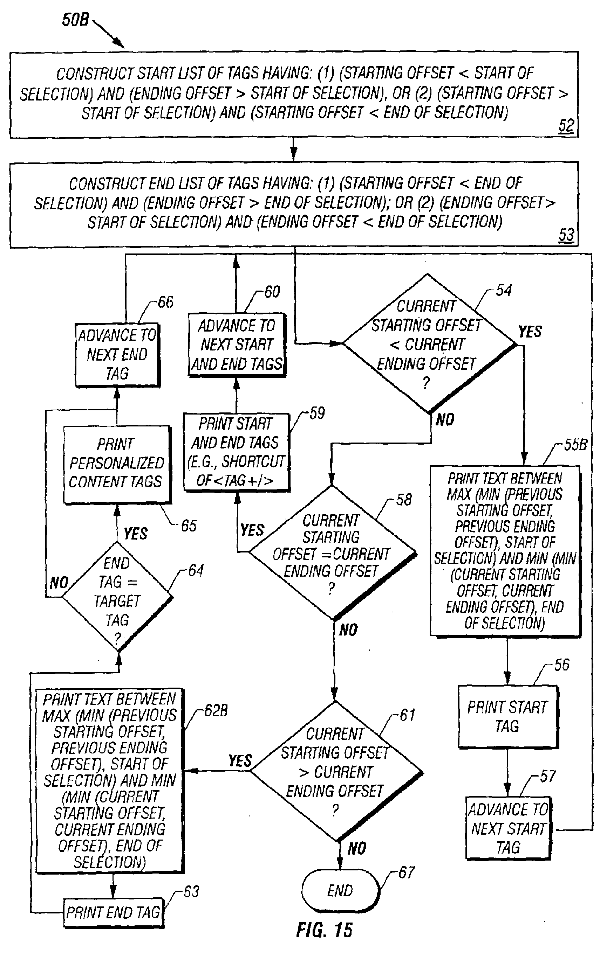

Content management system 5 includes an assembler 34 (FIG. 5) that responds to purchase order 19 by assembling at least partially a publication from its content and the descriptors stored in content management database 32. Assembler 34 manufactures an XML document according to methods 50A and 50B (respectively described later in reference to FIG. 14 and FIG. 15).

In one embodiment, assembler 34 includes a translator 64 (FIG. 5) that uses sytlesheets 39 in extensible stylesheet language (XSL) to save the assembled publication in one or more of various file formats such as SGML (standard general markup language) and HTML. Translator 64 is, for example, an XSL stylesheet processor called Xalan from the Apache Software Foundation (available from www.apache.org). Translator 64 passes the publication saved in SGML file format to converters 35. In one implementation, translator 64 is necessary because converters 35 do not take the assembled XML format as input. Thus, translator 64 converts the assembled XML file using XSL stylesheets to an XML format accepted by converters 35, such as SGML.

Content management system 5 includes converters 35 (FIG. 5) that provide layout for the publication according to stylesheets 36 and save the publication in one of various output file formats. Converters 35 include converters 35A to 35C. Converter 35A saves the publication in PDF, postscript, and Open eBook format. Converter 35A includes, for example, FrameMaker® + SGML and Acrobats Distiller® Server from Adobe. FrameMaker® + SGML applies stylesheets 36 to the publication and saves the publication as a postscript file. Stylesheets 36 generate the look and feel of the publication, such as the font type, the font size, the font style, and the margins for each section of the publication. FrameMaker® + SGML also adds tables, indices, headers, footers, and pagination to the postscript file. Distiller converts the postscript file to a PDF file.

During the ingestion of a publication, assembler 34, translator 64, and converter 35A generate a PDF file for publication. In one implementation, the PDF file of the publication is stored in eCommerce system 4 and linked to catalog web pages 22 so that the publication may be displayed in response to online queries from customers. In another implementation, the PDF file of the publication is stored in content management system 5. In this implementation, content management system 5 includes a document server application, such as Adobe Document Server from Adobe, that serves up pages from PDF files to customers in response their online queries. Alternatively, the PDF file of the publications is generated on demand from the customers and linked to catalog web pages 22.

A converter 35B saves the publication as a file in conformance with Open eBook (OEB) specification available from www.openebook.org. Converter 35B is, for example, an XSL translator that uses an XSL to save the assembled publication in OEB format. A converter 35C saves the publication in another file formats. Please note that additional converters 35 can be added for existing or later-developed file formats.

Content management system 5 includes an outputter 37 (FIG. 5) that transmits the final publication to a commercial printer (e.g., commercial printer 9A or 9B) or a customer computer (e.g., customer computer 8A or 8B) over network 3. In one implementation, outputter 37 transmits an order file along with the final publication to the commercial printer. Outputter 37 generates the order file in a format accepted by the commercial printer.

In one implementation of content management system 5, a server 501 ("application servers") comprises batch command tool 31, filters 30, format conversion library 33, ingest engine 9, assembler 34, translator 64, XSL sheets 39, converters 35, style sheets 36, and outputter 37 while another server 502 ("database server") comprises content management database 32. One skilled in the art understands that the functions of servers 501 and 502 can be duplicated and/or divided among additional servers to improve performance. In one variation, server 501 communicates to server 502 via the previously described middleware 26.

In one embodiment, rights and royalty management system 6 includes rights and royalty database 38 (FIG. 5). Rights and royalty database 38 is, for example, an Oracle 8i database from Oracle. Rights and royalty database 38 stores the royalty rights of the authors and the restrictions ("rights") on the distribution or sales of the publications. Rights and royalties database 38 responds to queries, inserts, and updates from eCommerce system 4 regarding the royalty rights of the authors and the restrictions the distribution or sales of the publications. Appendix C contains exemplary source code for the stored procedures of rights and royalties database 37. In one implementation of rights system 6, server *** of content management system 5 also stores rights and royalty database 38.

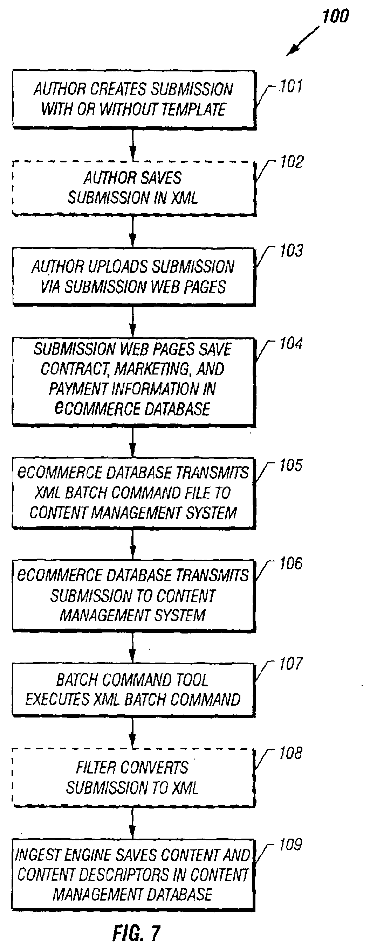

In one embodiment, action 100 (FIG. 6) includes actions 101 to 109 (FIG. 7). In an initial action 101, an author creates a submission 11 with or without template 17 and plug-in 16. As previously described, the author creates submission 11 with word processor 15 on author computer 1A. Action 101 is followed by optional action 102. In optional action 102, the author saves submission 11 in XML format. Alternatively, the author saves publication 16 as submission 11 in another file format. Optional action 102 is followed by action 103.

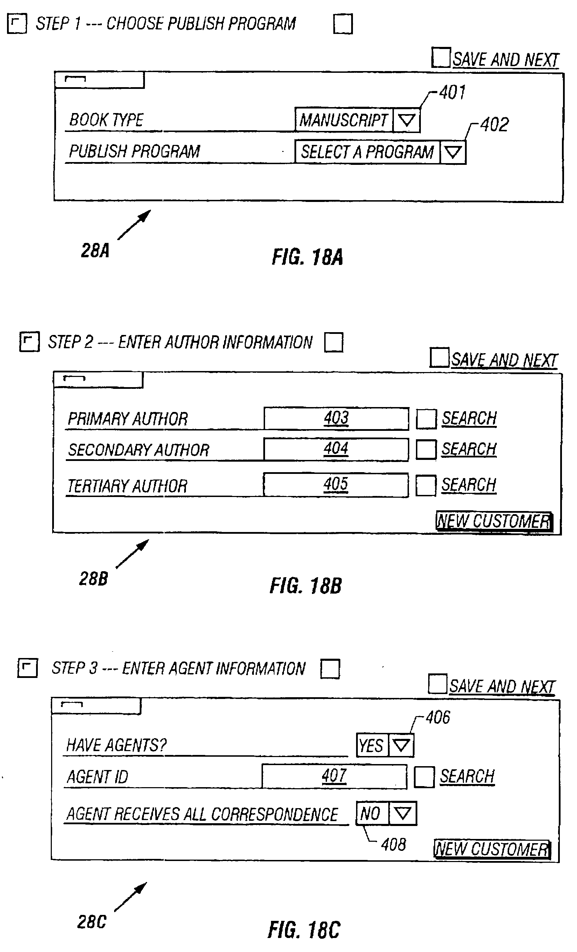

In action 103, the author uploads submission 11 via submission web pages 28. In one implementation where submission 11 is for a book, the submission process includes nine steps. In step one, the author selects a book type in a field 401 and a publish program in a field 402 of a submission web page 28A (FIG. 18A). Book types include manuscript and republish material. Manuscript refers to a work that is yet to be published and republish material refers to a work that has already been published before. Each publish program provide different royalty rates, costs, and services to the authors. The different services include editorial review, professional book design, profession cover design, distribution through traditional booksellers, and distribution through online booksellers such as Amazon.com.

In step two, the author enters author information on a submission web page 28B (FIG. 18B). The author enters the name of the primary author in a field 403, the secondary author in a field 404, and the tertiary author in a field 405. In step three, the author enters agent information on a submission web page 28C (FIG. 18C). The author selects whether he or she has an agent in a field 406, enters an agent ID (if the agent was previously registered) in a field 407, and selects whether the agent is to receive all correspondence from system 2 in a field 408.

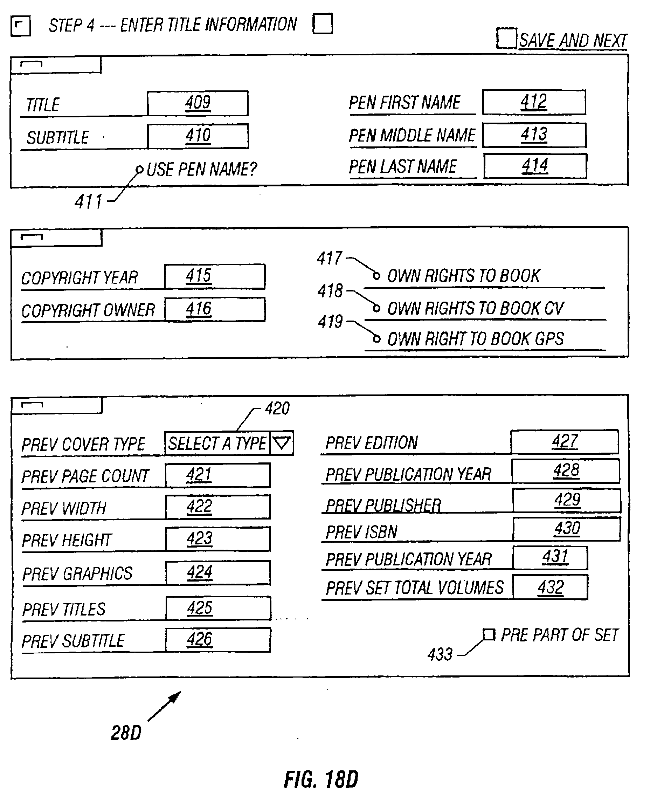

In step four, the author enters title information on a submission web page 28D (FIG. 18D). The author enters a title in a field 409 and a subtitle in a field 410. If the author uses a pen name, the author selects a button 411 and enters a pen first name in field 412, a pen middle name in a field 413, and a pen last name in a field 414. The author enters a copyright year for the book in a field 415 and the copyright owner in a field 416. If the author owns the rights to the book text, the author selects a button 417. If the author owns the rights to the book cover, the author selects a button 418. If the author owns the rights to a series of books, the author selects a button 419. If the book was previously published, the author selects a previous cover type in a field 420. The author respectively enters the previous page count, the previous book width, the previous book height, the previous graphics, the previous titles, the previous subtitle, the previous edition, the previous publication year, the previous publisher, the previous ISBN in a field 430, the previous publication year, and the previous set total volumes in fields 421 to 432. If the book was previously a part of a set of books, the author selects a button 433.

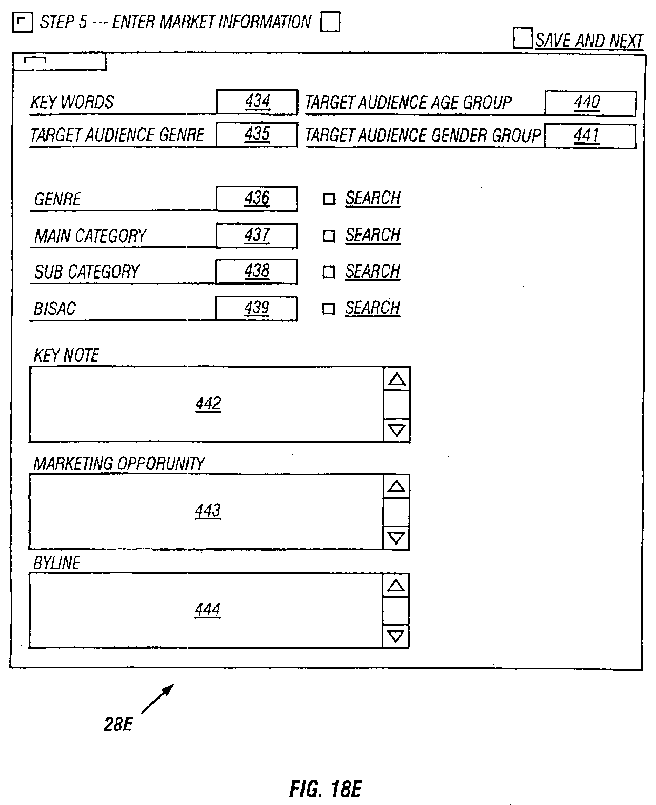

In step five, the author enters market information on a web page 28E (FIG. 18E). The author respectively enters key words, a target audience genre, a target audience age group, a target audience gender group, a genre, a main category, a sub category, and a BISAC number in fields 434 to 441. The author also respectively enters key note, marketing opportunity, and byline in fields 443 to 444. Key note includes a short description of the book. Marketing opportunity includes affiliations and memberships of the author. Byline is a quote attribution for the key note.

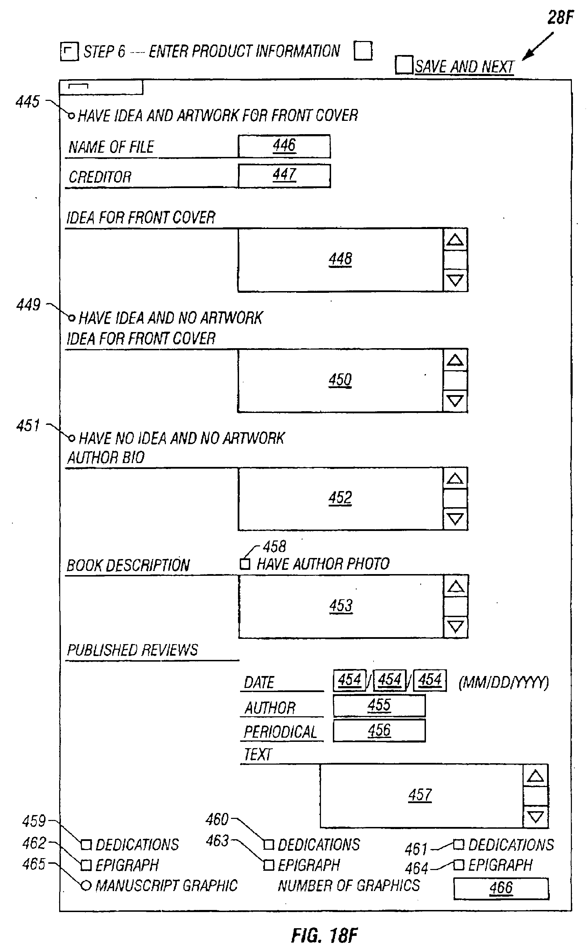

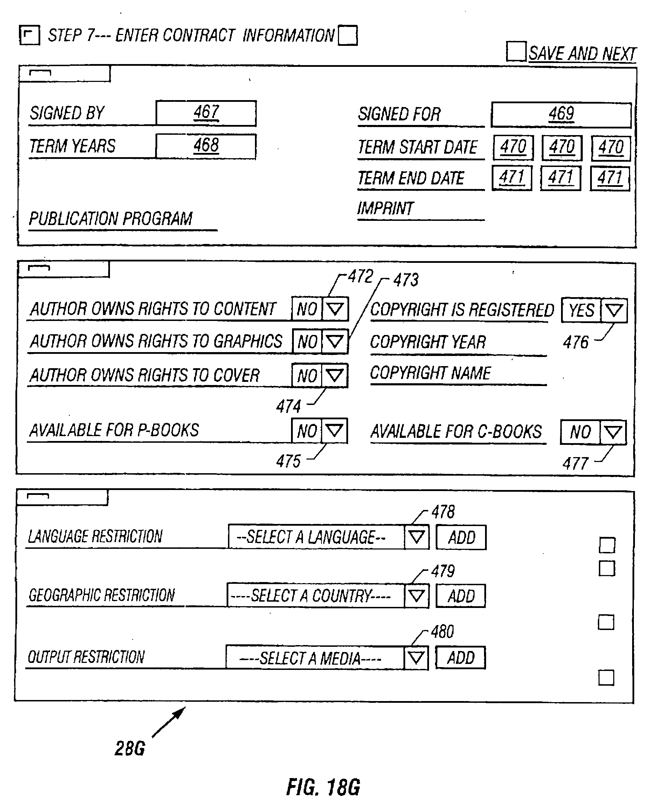

In step six, the author enters production information on a web page 28F (FIG. 18F). If the author has an idea and artwork for the front cover of the book, the author selects a button 445. If the author has a file for the front cover, the author respectively enters the name of the file of the front cover and the creditor of the cover work in fields 446 and 447. If the author has an idea for the front cover, the author enters the idea in a field 450. If the author has no idea for the front cover, the author selects a button 451. The author respectively enters the author bio, the book description, the published review date, the publish review author, the publish review periodical in fields 452 to 456. If the author has an author photo, the author selects a button 458. The author can select a number of dedications from buttons 459 to 461 and enter the text for the dedication in a field 457. Similarly, the author can select a number of epigraphs from button 462 to 464 and enter the text for the epigraph in field 457. If the author has graphics, the author selects a button 465 and enters the number of graphics in a field 466.

In step seven, the author enters contract information on a web page 28G (FIG. 18G). In one implementation, the author must sign a contract in writing. In this implementation, the author enters the name of the person who signed the contract in field 467 and the name of the person that was signed for in field 469. The author respectively enters term years, term start data, and term end data in fields 468, 470, and 471. The author respectively selects whether or not he owns the rights to the content, the rights to the graphics, and the rights to the cover in fields 472 to 474. The author respectively selects whether or not the content (in whole or in part) is available to be made into a p-book or a c-book in fields 475 and 477. The author selects whether the copyright is registered in field 476. The author selects language restriction, geographic restriction, and output restriction in fields 478 to 480.

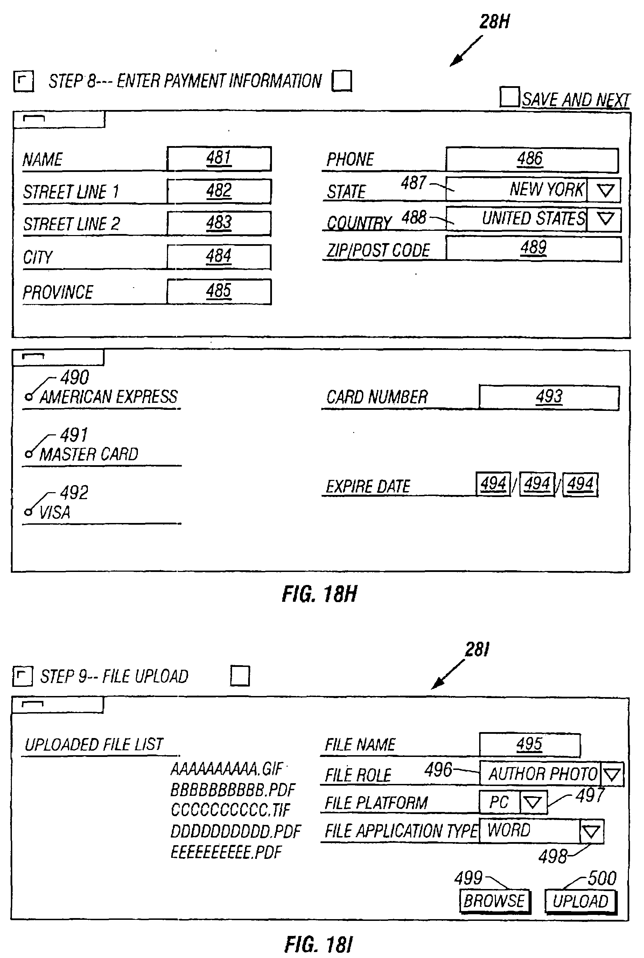

In step eight, the author enters payment information on a web page 28H (FIG. 18H). The author enters name, street address 1, street address 2, city, province, phone number, state, country, and zip code in fields 481 to 489. The author selects a credit card type among buttons 490 to 492 and respectively enters the card number and expiration date in fields 493 and 494.

In step nine, the author selects the files to be uploaded to publishing system 2 on a web page 28I (FIG. 18I). The author enters the file name in field 495. The author selects a file role, a file platform, and a file application type from fields 496 to 498. File role identifies the purpose of a file. File roles include author photo, book cover, book block, and illustration. The author selects a button 499 to browse through his local drive to select a file and a button 500 to upload the file to publishing system 2. Once the author selects button 500, the information collected in the previous pages and the selected files are uploaded to eCommerce system 4.

Action 103 is followed by action 104. In action 104, submission web pages 28 save contract information 12, payment information 13, and marketing information 14 in eCommerce database 23. Action 104 is followed by action 105. In action 105, eCommerce database 23 transmits an XML batch command to batch command tool 31 to store submission 11 and its related information received via web pages 28A to 28I in content management database 32. A stored procedure of eCommerce database 23 generates the XML batch command according to a method 150 (FIG. 8).

In an initial action 151, the stored procedure of eCommerce database 23 writes an "insert_publication" XML tag in an XML batch command file. "Insert_publication" XML tag is a batch command that creates a publication master record in content management database 32. "Insert_publication" XML tag includes attributes that describe "pub_id", "pub_type_id", "submit_date", and "pub_size" (see Table 1 below). "Pub_id" is an identifier of a submitted publication given by eCommerce database 23. "Pub_type_id" is an identifier of the type of the submitted publication, such as novel, short story, and etc. "Submit_date" is the date that the submitted publication was submitted to eCommerce system 4. "Pub_size" is the physical dimensions of a previously published document, such as 6 by 9 inches. Action 151 is followed by action 152.
In action 152, the stored procedure of eCommerce database 23 writes an "insert _publication_file" XML tag. "Insert _publication_file" batch command creates a publication file master record in content management database 32. "Insert_publication_file" XML tag includes attributes that describe "pub_id", "file_role_id", "internal_filename", "user_filename", and "detail" (see Table 1 below). "File_role_id" is an identifier of the purpose of a file as related to the publication, i.e., how it will be used. For example, "file_role_id" includes "XML book block," "PDF book block," "XML book cover," and "PDF book cover." "XML book block" and "PDF book block" are files of the publication respectively saved in XML and PDF file formats. Similarly, "XML book cover" and "PDF book cover" are files of the publication's cover respectively saved in XML and PDF file formats. "User_filename" is the filename provided by the author during submission. "Internal_filename" is a filename assigned to the file by eCommerce database 23 in case two users use the same "user_filename" to identify their files. Action 152 is followed by action 153.

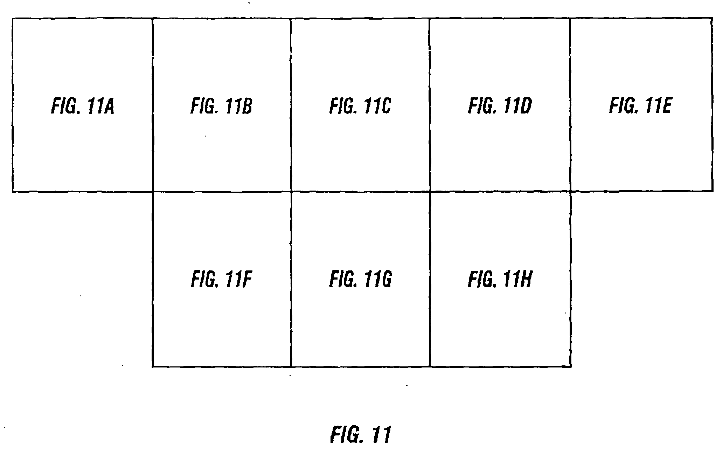

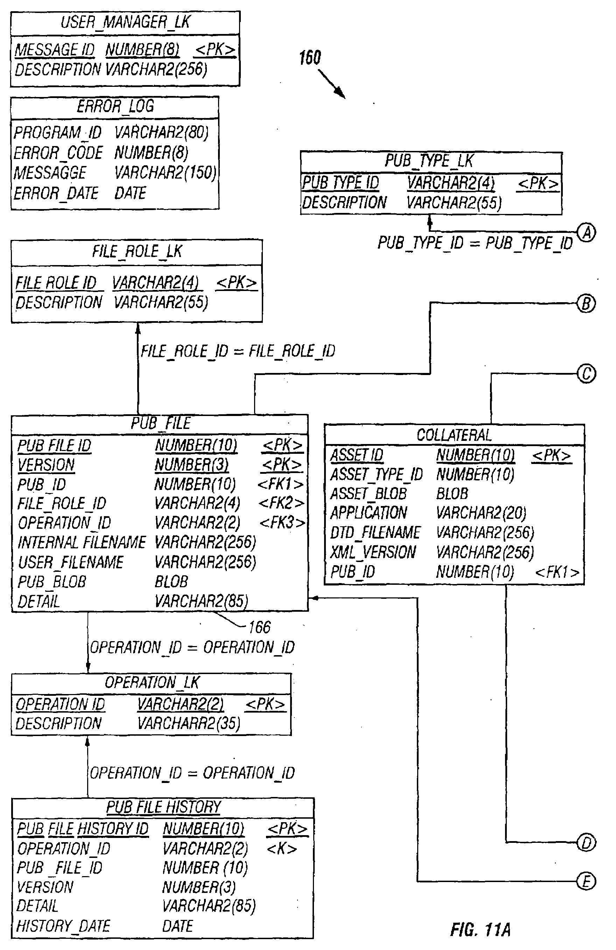

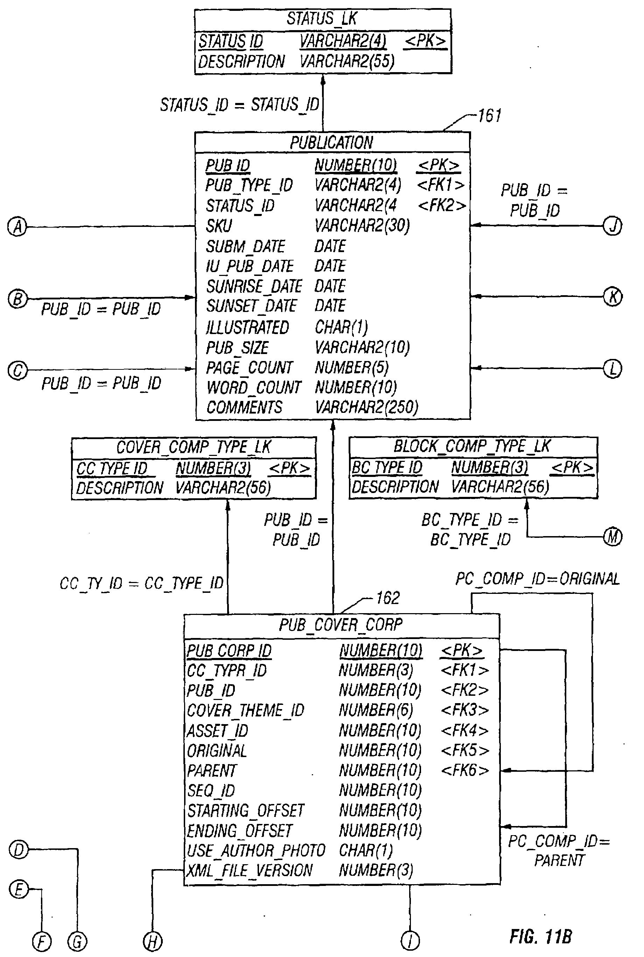

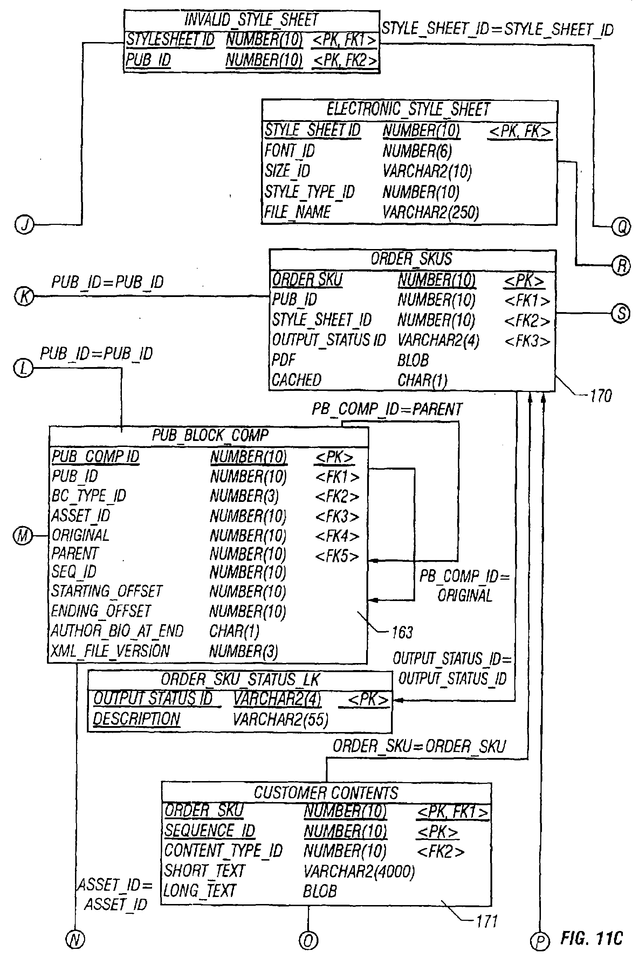

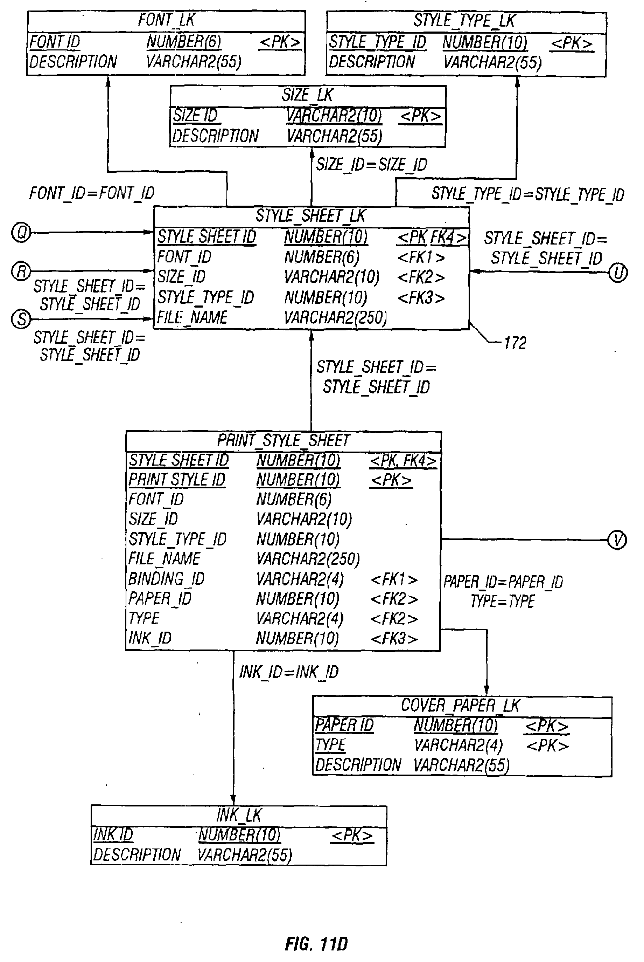

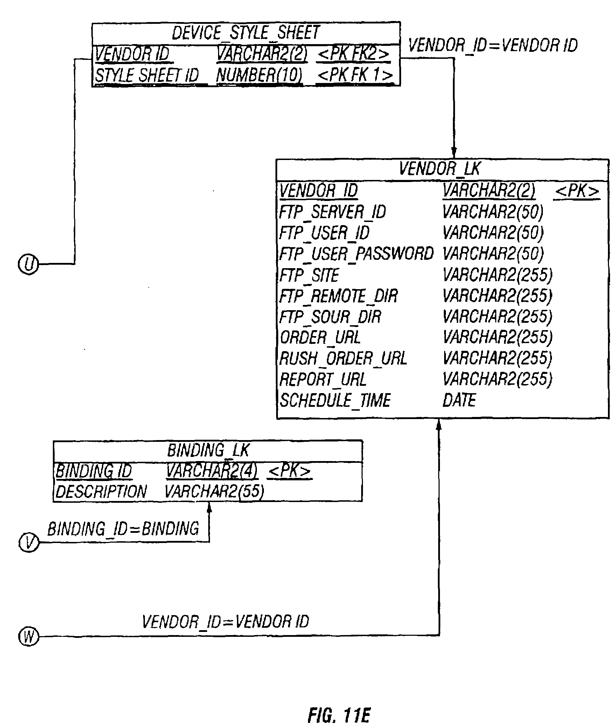

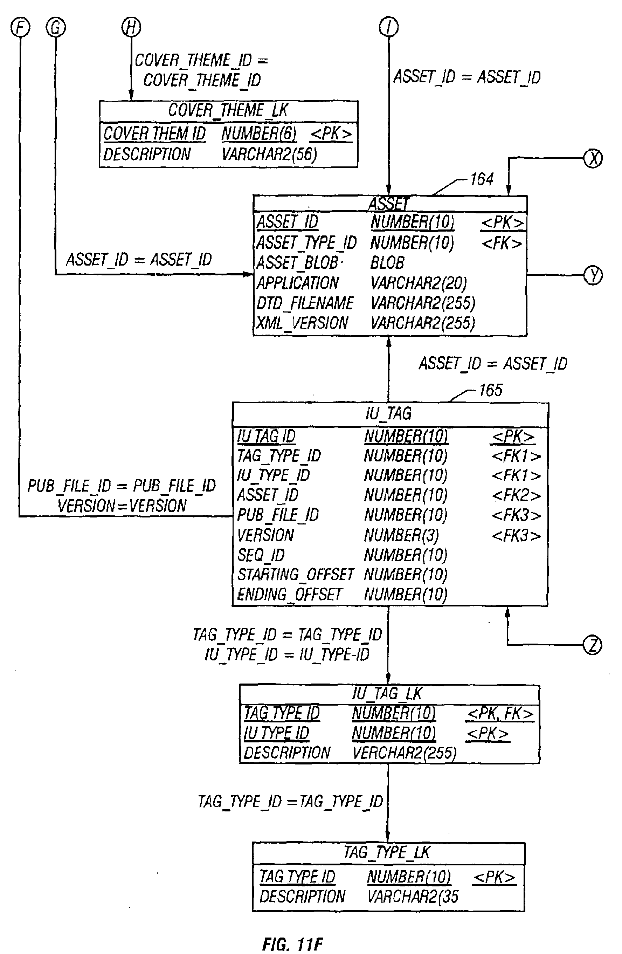

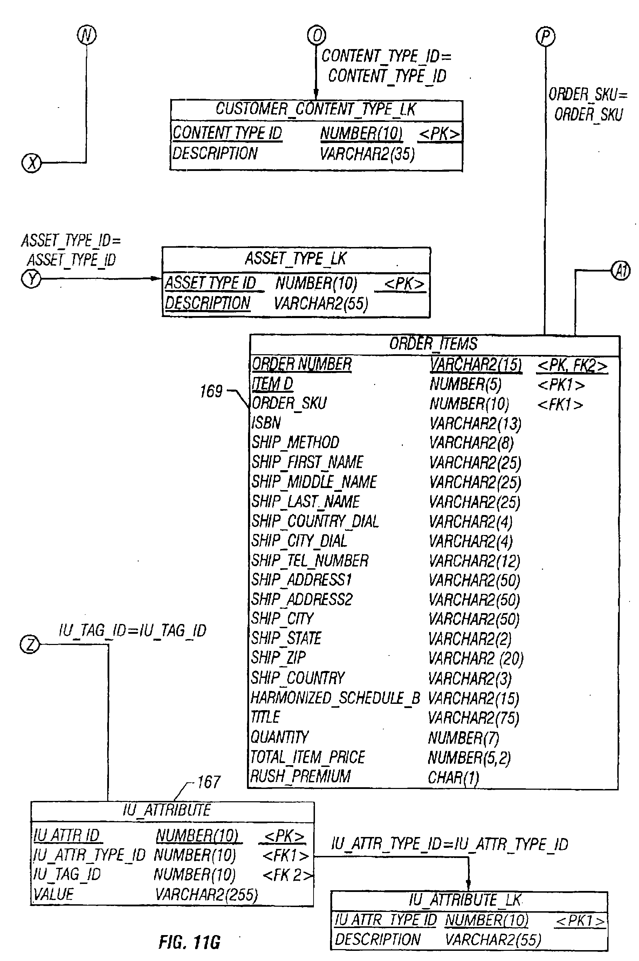

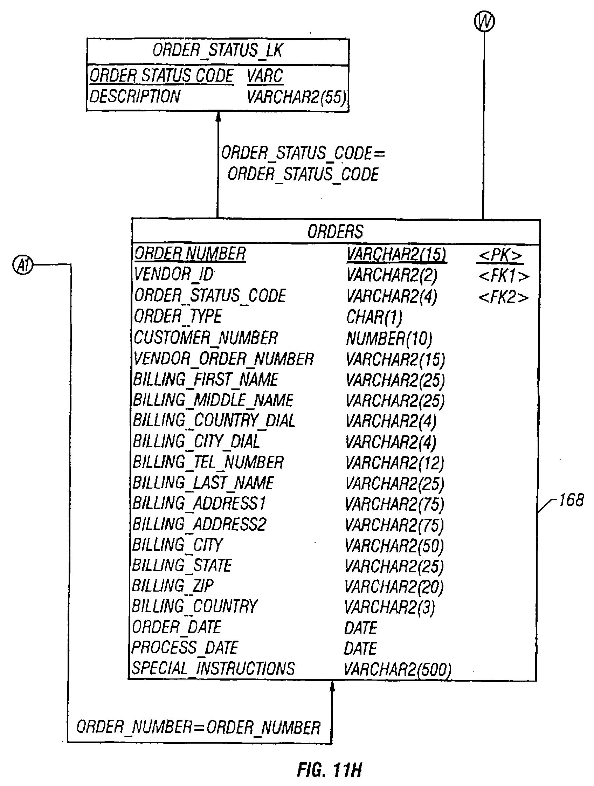

In action 153, the stored procedure of eCommerce database 23 writes an "insert_tag" XML tag. "Insert_tag" batch command allows one or more arbitrary empty tags to be associated with the submitted publication in content management database 32. "Insert_tag" has an attribute of "pub_id" (see Table 1 below). "Insert_tag" batch command causes batch command tool 31 to create a row in an iu_tag table 165 (FIG. 11) and save an XML tag with the "pub_id" of the submitted publication. The empty tags are nested between the "insert_tag" XML tags. The empty tags are, for example, publication level tags that apply to the entire publication. The empty tags include attributes that identify their tag type and attributes of the tag. The tag types include "title type", "name type", "keywords", and "taxonomy". The inserted tags are useful when the publication was not saved as an XML file and cannot be otherwise sorted in content management database 23. By associating an XML tag with the publication, the publication can be sorted in content management database 32 by the XML tag in iu_tag table 165. Appendix I contains exemplary source codes for the stored procedure of eCommerce database 23 that writes the XML batch commands. An exemplary XML batch command file is illustrated in Table 1.

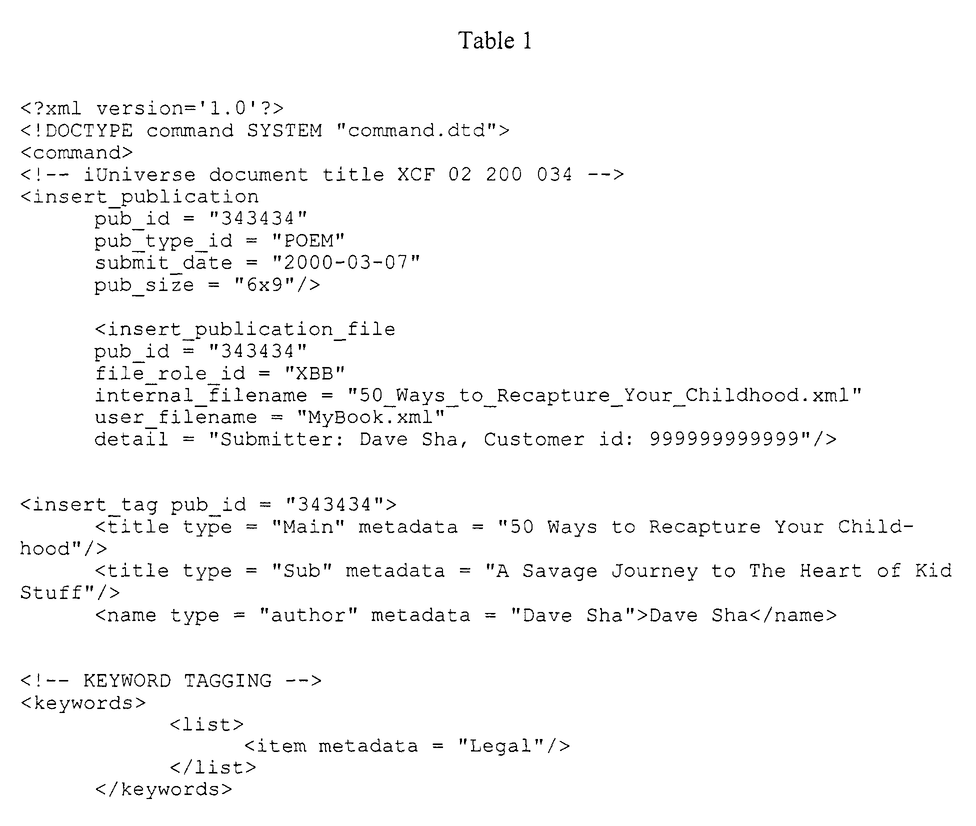

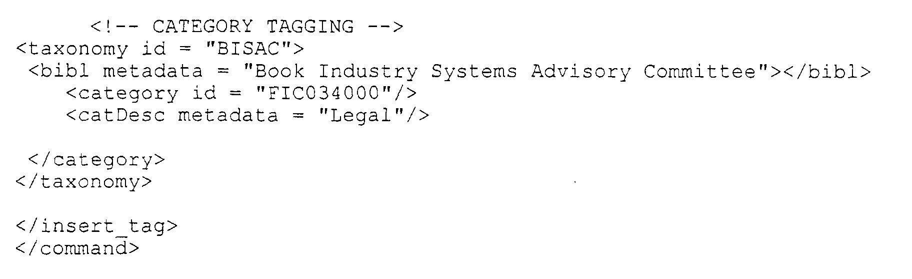

Batch command tool 31 parses the above XML batch command file with a document type definition (DTD) file to extract and execute the batch commands. Appendix H contains an exemplary command DTD file. Please note that stored procedures instead of batch commands can also insert, update, and query content management database 32 and rights and royalty database 38.

Action 105 (FIG. 7) is followed by action 106. In action 106, eCommerce database 23 transmits submission 11 and the selected files (e.g., illustration files) to a staging directory in content management system 5 where submission 11 and the selected files wait to be processed by ingest engine 29. As previously described, submission web pages 28 can directly transmit the information collected from the author, submission 11, and the selected files to content management system 5 through middleware 26 as an alternative to actions 104 to 106. In one implementation, a human operator of publishing system 2 uses a computer 352A ("editorial computer") to download submission 11 from content management system 5. Editorial computer 352A is similar to author computer 1A and includes word processor 15, plug-in 16, and templates 17. The human operator uses word processor 15, plug-in 16, and templates 17 to edit submission 11 for style, grammar, and layout. After the editorial process, the human operator uploads submission 11 to content management system 5. Editorial computer 352B is similar to editorial computer 352A. As FIG. 1 shows, there can be additional editorial computers.

Action 106 is followed by action 107. In action 107, batch command tool 31 executes the XML batch commands in the XML batch command file according to a method 110 (FIG. 9). In an initial action 111, batch command tool 31 uses the previously described XML parser to generate a DOM tree structure. Action 111 is followed by action 112. In action 112, batch command tool 31 determines the command tag type of a node. Action 112 is followed by action 113. In action 113, batch command tool 31 determines the attribute types of the tag. Action 113 is followed by action 114. In action 114, batch command tool 31 saves (maps) the attribute values to variables that correspond to the attributes. Action 114 is followed by action 115.

In action 115, batch command tool 31 applies the variable values to respective tables in content management database 32 by inserting or updating tables with the corresponding variables (i.e., attribute values). Action 115 is followed by action 116. In action 116, batch command tool 31 determines if all the nodes have been traversed. If all the nodes have been traversed, action 116 is followed by action 117, which ends method 110. Otherwise, action 116 is followed by action 112 so that batch command tool 31 examines the next node. Batch command tool 31 can traverse the DOM structure tree in many conventional ways, such as depth first or breadth first. Appendix B contains exemplary source codes for batch command tool 31.

In response to the "insert_publication" XML batch command, batch command tool 31 creates a master record for a publication in publication table 161. Batch command tool 31 adds a row in publication table 161 (FIG. 11) and inserts the attributes of the "insert_publication" XML batch command in the appropriate columns. In one implementation, batch command tool insert a value in "status_ID" of publication table 161 to indicate that the publication is waiting to be processed by ingest engine 29. Batch command tool 31 adds a row in a pub_cover_comp table 162 as a placeholder (e.g., a dummy entry that doesn't contain any useful data but reserves space for future data) for the book cover so that a book cover asset placeholder may be created in an asset table 164. Batch command tool 31 also adds a row in a pub_block_comp table 163 as a placeholder for the book block (e.g., the content of submission 11) so that a book block asset placeholder may be created in asset table 164. Batch command tool 31 adds two rows in asset table 164 as placeholders for the book cover asset and the book block asset.

During ingest (described later), ingest engine 29 saves the XML tags in an iu_tag table 165 and the attributes and attribute values of the XML tags in iu_attribute table 167. Ingest engine 29 also saves the content between the XML tags in the previously created book block placeholder in asset table 164, and the graphics information that makes up the book cover as in the previously created book cover placeholder in asset table 164.

In response to the "insert_publication_file" batch command, batch command tool 31 creates a master record for each file associated to the publication (submission 11 and files linked to submission 11) in pub_file table 166. Batch command tool 31 adds a row to pub file table 166 and inserts the attributes of the "insert_publication_file" batch command in the appropriate columns. Batch command tool 31 also saves each file associated to the publication (submission 11 and files linked to submission 11) in pub_file table 166.

In one implementation, action 107 (FIG. 7) is followed by optional action 108. In optional action 108, filters 30 convert submission 11 that was not in XML file format to XML file format. Alternatively, the previously described human operator uses editorial computer 352A to manually convert submission 11 to XML format. The human operator first downloads submission 11 from content management system 5 to editorial computer 352A. The human operator then uses word processor 15, plug-in 16, and templates 17 to manually identify the sections of submission 11 and save submission 11 in XML format. The human operator retransmits submission 11 to content management system 5 for processing by ingest engine 29. In addition to identify the sections of submission 11, the human operator may edit submission 11 for style, grammar, and layout. Optional action 108 is followed by action 109. In action 109, ingest engine 29 parses submission 11 and saves content (e.g., text) and descriptors (e.g., XML tags) in content management database 32 in accordance to a method 40 (FIG. 10). Ingest engine 29 may periodically query "status_ID" field in publication table 161 to determine which publications are waiting to be ingested.

In an initial action 41, ingest engine 29 uses the previously described XML parser to build a DOM tree structure from submission 11. XML parser parses submission 11 with a document type definition (DTD) file. Appendix A contains an exemplary DTD file for parsing a book of poetry. Action 41 is performed by software shown the middle of p.2 in file Parse.sqlj in Appendix D. Each node in this DOM tree structure represents an XML object and each XML object includes tags, attributes, attribute values, and any content nested between a pair of tags. Action 41 is followed by action 42. In action 42, ingest engine 29 determines if a node is an XML tag node. If the node is an XML tag node, the next action is 43. Otherwise, the next action is action 46. Action 42 is performed by software shown at the bottom of p. 3 of file Parse.sqlj in Appendix D.

In action 43, ingest engine 29 saves the XML tag type and the starting position ("starting offset") and ending position ("ending offset") of a content nested between the XML tag in iu_tag table 165 (FIG. 11) of content management database 32. Starting offset is the number of bytes from the beginning of a string that contains all of the content to the first character of the content nested between a pair of XML tags, where each byte represents one character. Similarly, ending offset is the number of bytes from the beginning of the string that contains all of the contents to the last character of the content nested between a pair of XML tags. Action 43 is followed by action 44. Action 43 is performed by software shown in the middle of p. 7 in file Parse.sqlj of Appendix D. In action 44, ingest engine 29 saves attribute names and attribute values of the XML tag node in iu_attribute table 167 of content management database 32. Action 44 is followed by action 47. Action 44 is performed by software shown in the middle of p. 6 in file Parse.sqlj of Appendix D.

In action 45, ingest engine 29 determines if a node is a text (content) node. If the node is a text node, action 45 is followed by action 46. Otherwise, action 45 is followed by action 47. Action 45 represents codes at the bottom of p. 3 of file Parse.sqlj in Appendix D. In action 46, ingest engine 29 saves the content in asset table 164 (FIG. 11) of content management database 32. Action 46 is followed by action 47. Action 46 represents codes at the bottom of p. 3 of file Parse.sqlj in Appendix D.

In action 47, ingest engine 29 determines if all nodes have been traversed. If all nodes have been traversed, action 47 is followed by action 49. Otherwise, action 47 is followed by action 48. Action 47 represents code from bottom of p. 5 of file Parse.sqlj in Appendix D. In action 48, ingest engine 29 examines the next node. Ingest engine 29 may traverse the DOM tree structure in one of many conventional ways. Ingest engine 29, for example, traverses the DOM tree structure depth first. In action 49, method 40 ends. In one implementation, ingest engine 29 updates the "status_ID" of publication table 161 to indicate that the publication has been ingested. Appendix D contains exemplary source code for ingest engine 29.

In one variation, method 40 includes optional steps 350 and 351. In optional action 350, ingest engine 29 determines if the attribute is a link to an external file. If the attribute is a link, optional action 350 is followed by action 351. Otherwise, optional action 350 is followed by action 47. In optional action 351, ingest engine 29 calls format conversion library 33 to save the external file in another file format for storage and manipulation. For example, if the external file is an image file, ingest engine 29 uses conversion library 33 to save the external file in a resolution independent format. Ingest engine 29 saves the file information of the external file in pub_file table 166 so that the external file may be retrieved later.

In another variation, ingest engine 29 is modified so that it replaces all "&" characters in entity references (a type of node) with a "∼" prior to parsing by the previously described Parser for Java. This is done to prevent the Parser for Java from replacing "&" characters in entity references with other characters when XML documents are parsed. Translator 64 later replaces the "∼" character in entity references with "&" character to construct the entity references in their original forms. The above described steps are necessary because converter 35A requires the entity references to include "&" characters to properly format and save the publication.

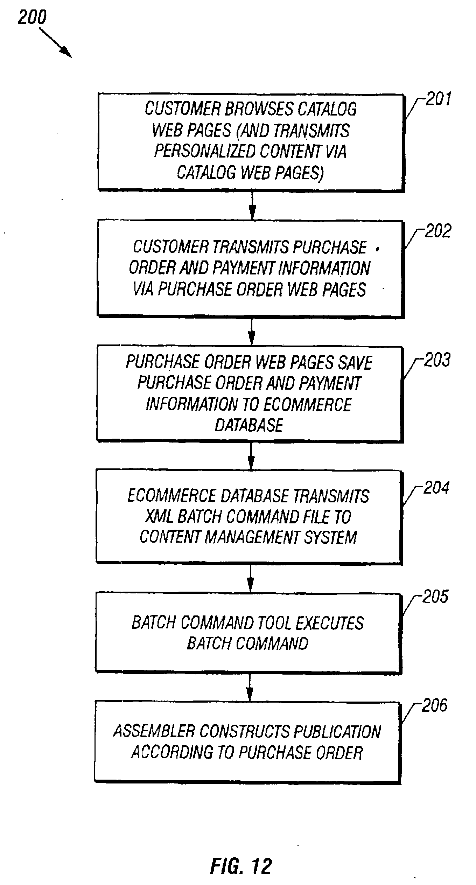

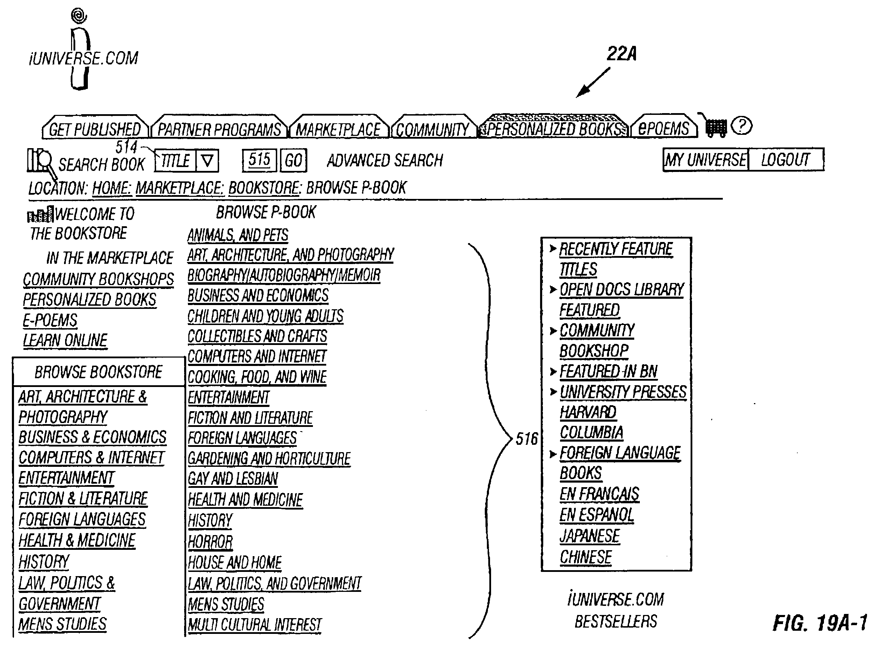

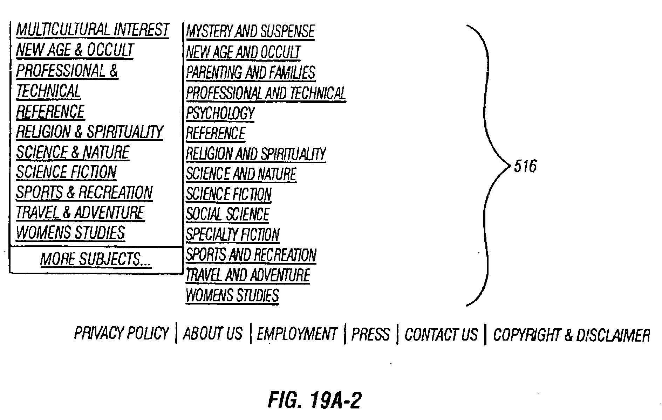

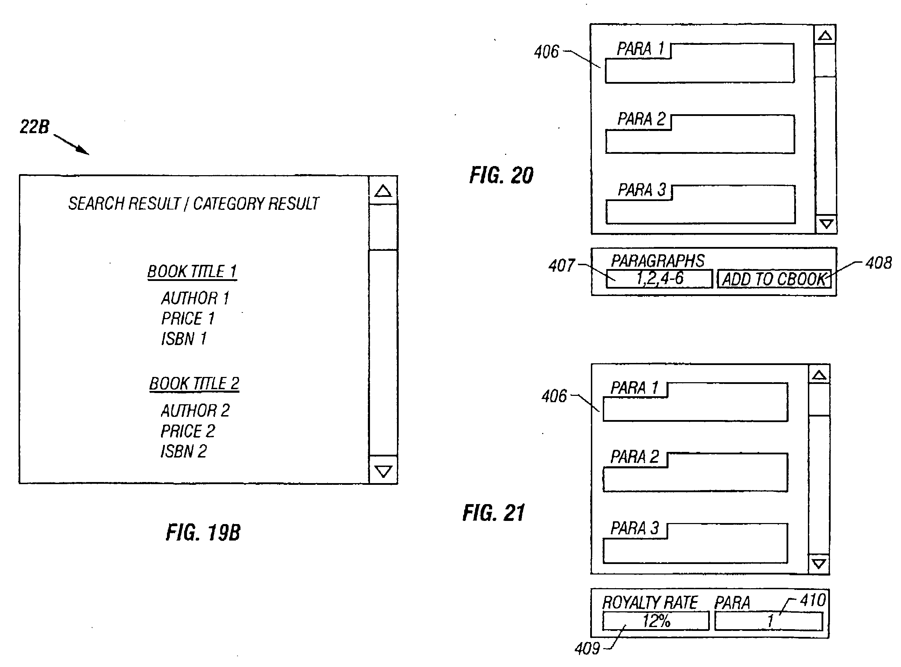

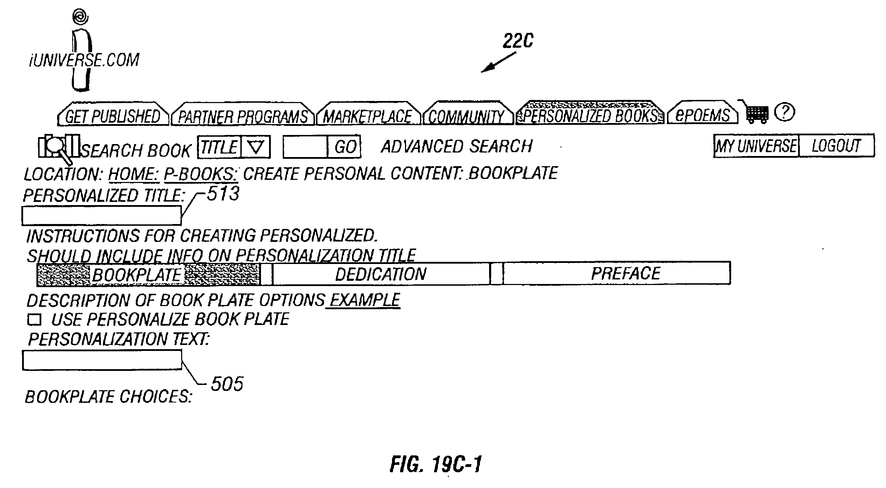

In one implementation, action 200 (FIG. 6) includes actions 201 to 206 (FIG. 12). In initial action 201, a customer browses catalog web pages 22. The customer may search for a publication by selecting a search category in field 515 and entering words to search for in that that search category in field 515 of web page 22A (FIG. 19A). Search categories include title, author, and keywords. The customer can also select a category of publication shown as hypertext links 516. Web page 22B displays the search result or the category result from the customer's action in web page 22A. The result includes various publication titles, authors, price, and ISBN numbers. The customer may obtain further details on the publications by selecting the hypertext link in each publication's title. In one variation, the customer views at least a portion of the publication from customer computer 8A. eCommerce system 4 transmits the portion of the publication as a part of a web page of catalog web pages 22 if permitted by the contractual terms between the author and the operators of publishing system 2.

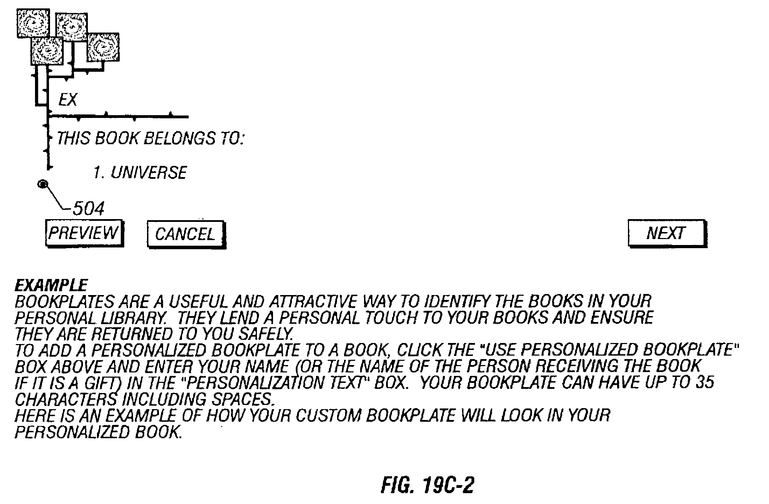

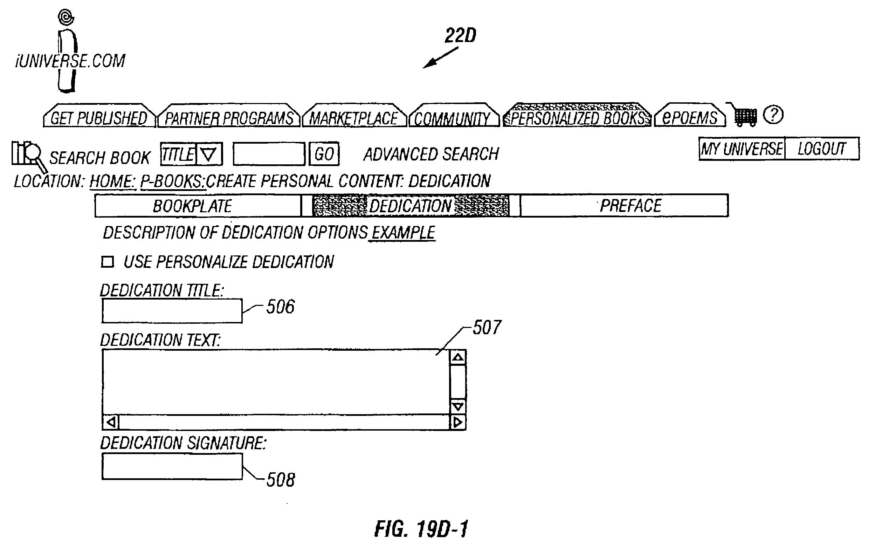

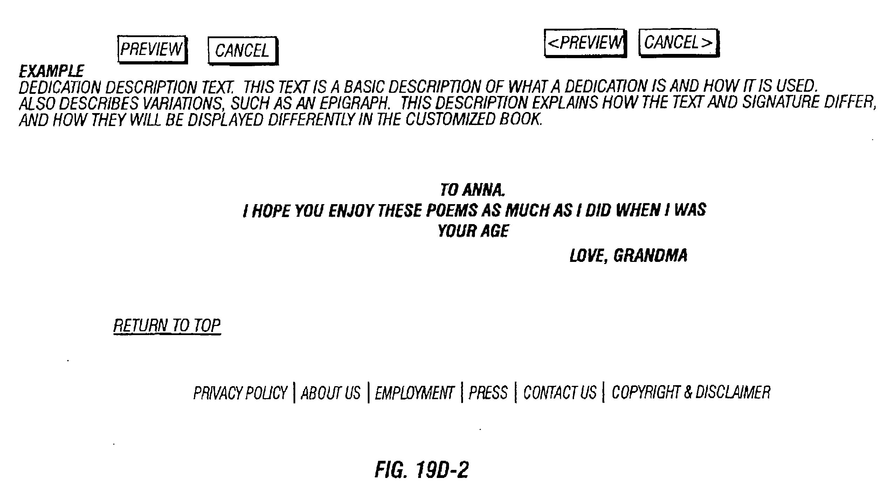

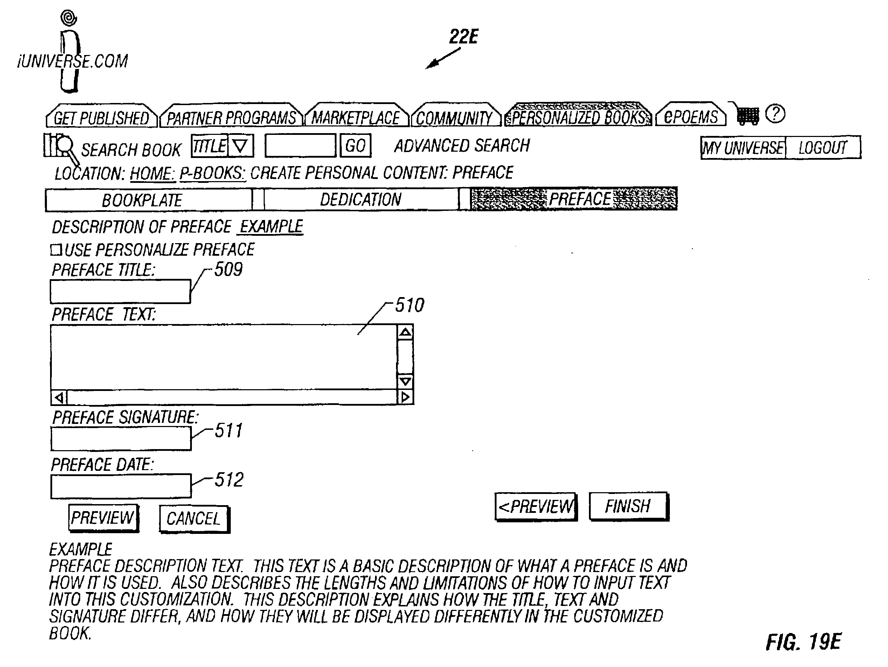

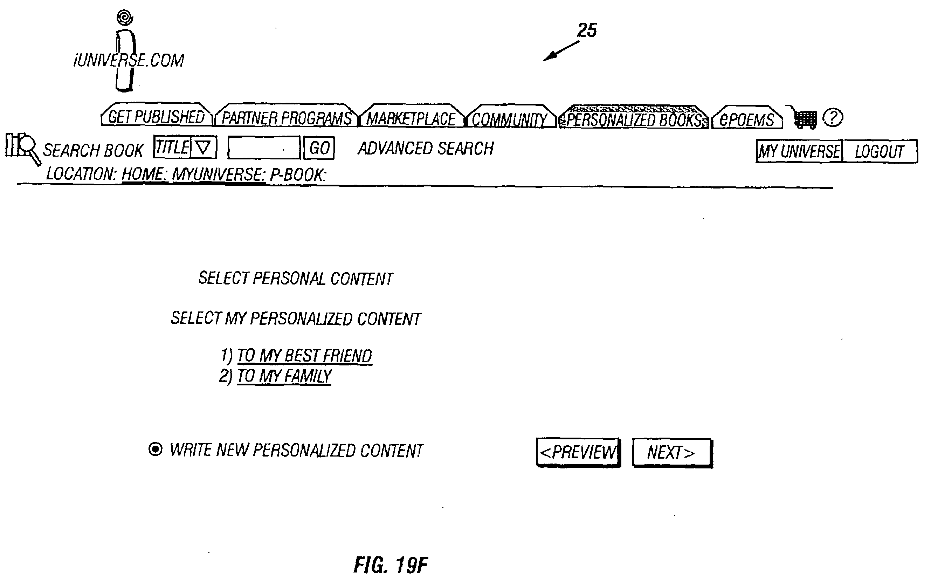

In another variation, the customer uploads via catalog web pages 22 personalized content 20 to be combined with a purchased publication to create a personalized publication (p-book). In step one, the customer enters the title for this personalized content 20 in a field 513 of web page 22C (FIG. 19C). The customer also chooses a bookplate by selecting a button 504 and enters the name of the person which the p-book will belong to in a field 505. One skilled in the art understands that additional bookplates may be made available. In step two, the customer respectively enters a dedication title, dedication text, and dedication signature in fields 506, 507, and 508 of web page 22D (FIG. 19D). In step three, the customer respectively enters a preface title, preface text, preface signature, and preface date in fields 509, 510, 511, and 512 of web page 22E (FIG. 19E). Catalog web pages 22 saves the customer's personalized content 20 in eCommerce database 23. In this variation, the customer can create numerous personalized contents 20. When the customer decides to purchase a p-book, he or she can choose one of the personalized contents 20 from a web page 25 (FIG. 19F) by selecting the hypertext link of the personalized content title.

In another variation, catalog web pages include a web page (FIG. 20) where the customer can view a publication in a frame 406. The customer enter the paragraph numbers of the paragraph that he or she wishes to purchase in a field 407 and selects a button 408 to record his selection so that these paragraphs are later combined with selected paragraphs from another publication to create a customized publication (c-book). Action 201 is followed by action 202.

In action 202, the customer transmits purchase order 19 and payment information 21 via purchase order web pages 25 to eCommerce system 4. Purchase order web pages 25 offers the customer the option to combine a publication with the previously described personalized content 20. Depending on purchase order 20, purchase order web pages 25 query rights and royalty database 38 to determine if the publication can be distributed or sold in the manner ordered by the customer. Action 202 is followed by action 203.

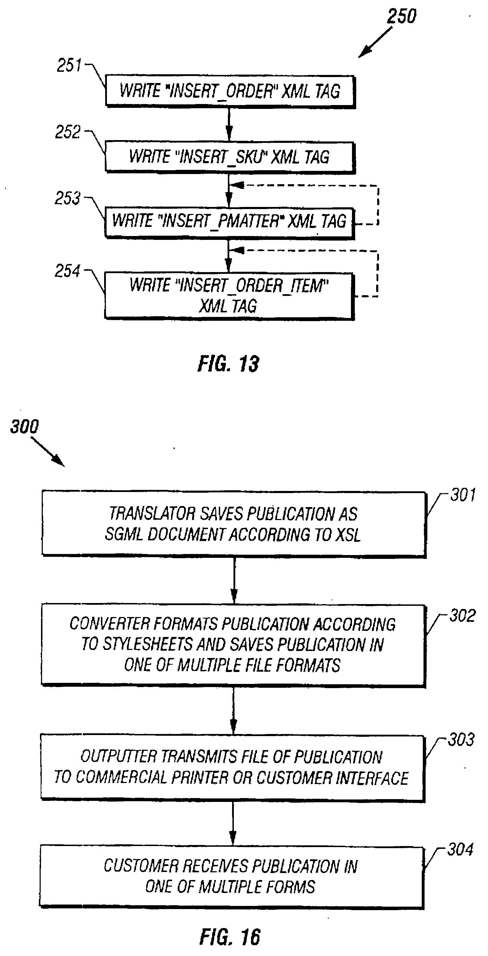

In action 203, purchase order web pages 25 saves purchase order 19 and payment information 21 in eCommerce database 23. Action 203 is followed by action 204. In action 204, eCommerce database 23 transmits an XML batch commands including purchase order 19, personalized content 20, and payment information 21 to content management system 5. eCommerce database 23 generates the XML batch command according to a method 250 (FIG. 13).

In an initial action 251, a stored procedure of eCommerce database 23 writes an "insert_order" XML tag. "Insert_order" XML tag is a batch command that creates an order record in content management database 32. "Insert_publication" XML tag includes attributes of "customer_number", "order_number", "vendor_id" and other common information associated with an order (see Table 2 below). "Customer_number" is an identifier of the customer. "Order_number" is an identifier of this order. "Vendor_id" is an identifier of a commercial printer where the publication will be sent for printing. In one variation, a routing algorithm of eCommerce database 23 determines from the zip code submitted by the customer the commercial printer located closest to the customer. The stored procedure inserts the "vendor_id" of that commercial printer in the XML batch command. Action 251 is followed by action 252.

In action 252, the stored procedure of eCommerce database 23 writes an "insert_sku" XML tag. "Insert_sku" XML tag is a batch command that inserts information about a book in content management database 32. "Insert_sku" XML tag includes attributes of "order_sku", "pub_id", "style_id", and "cached" (see Table 2 below). "Order_sku" is an identifier that describes a unique combination of book, style, and personalized content. "Style_id" is an identifier of a style to be applied to the publication. "Cached" is marked as true if the publication is known to be cached at a commercial printer and does not need to be resent to the commercial printer. Action 252 is followed by action 253.

In action 253, the stored procedure of eCommerce database 23 writes an "insert_pmatter" XML tag. "Insert_pmatter" XML tag is a batch command that inserts personalized content into the content management database 32. "Insert_pmatter" XML tag includes attributes of "order_sku" and "ptype" (see Table 2 below). "Ptype" is an identifier of the type of personalized content, such as "book_plate_content" for a bookplate and "dedication content" for a dedication. The stored procedure of eCommerce database 23 can write additional "insert_pmatter" XML tags according to the purchase order from the customer. Action 253 is followed by action 254.

In action 254, the stored procedure of eCommerce database 23 writes "insert_order_item" XML tag. "Insert_order_item" XML tag is a batch command that inserts an order item into content management database 32. "Insert_order_item" XML tag includes attributes of "order_number", "item_id", the general shipping information, "order_sku", "title", "isbn," and "quantity" (See Table 2 below). "Item_id" is an identifier of the order of this order item (e.g., 1, 2, 3, and etc.). "Title" is the title of the book for this order item. "Isbn" is then international standard book number ("ISBN") of the book for this order item. "Quantity" is quantity of the books to ship for this order item. The stored procedure of eCommerce database 23 can write additional "insert_order_item" XML tags according to the purchase order from the customer. Table 2 illustrates an exemplary XML batch command file described above.

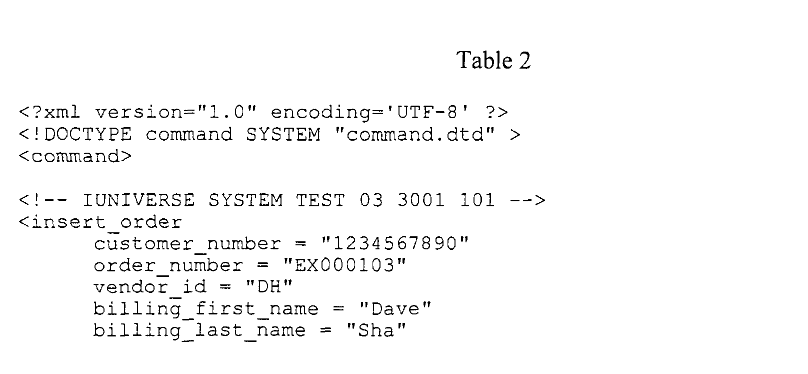

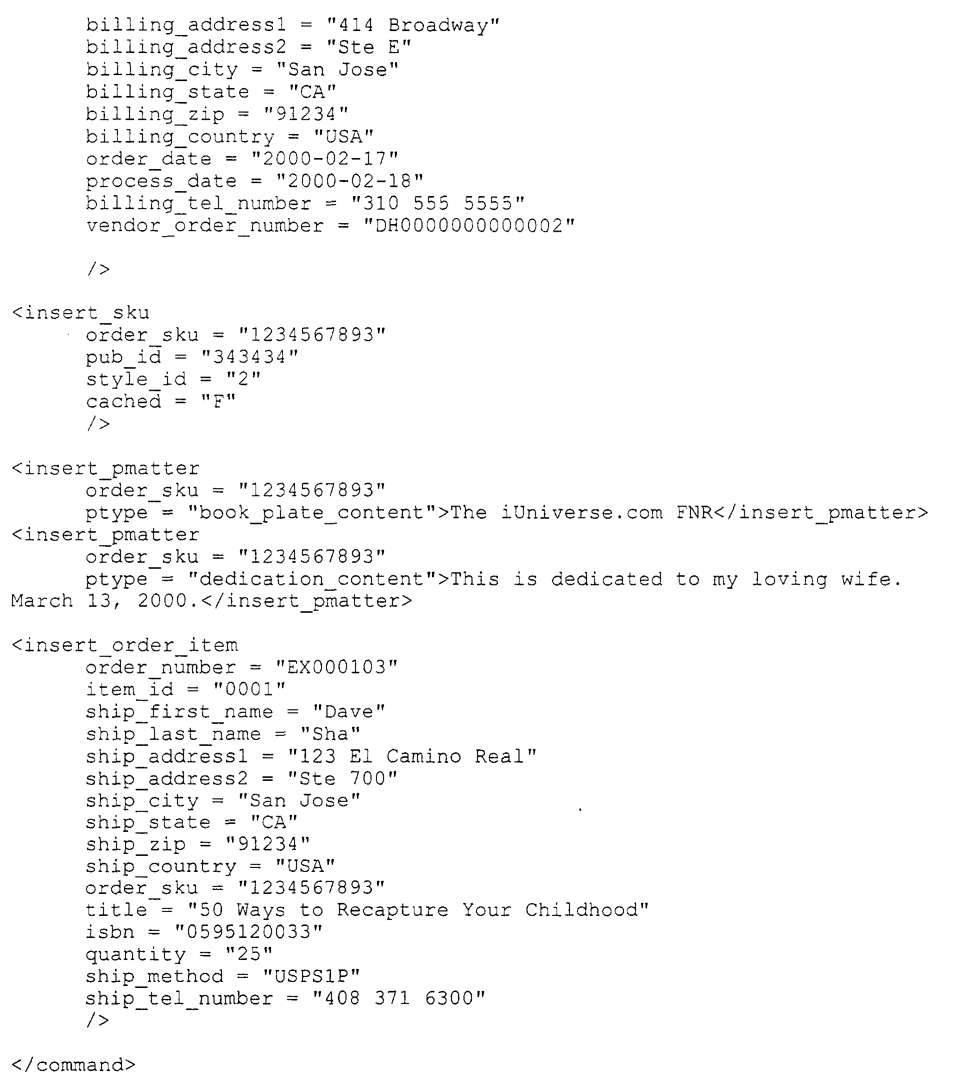

Batch command tool 31 validates and parses the above XML batch command file with a DTD file to extract and execute the batch commands. Appendix H contains an exemplary DTD file.

In response to the "insert_order" XML batch command, batch command tool 31 creates a record for an order in orders table 168 (FIG. 11). Batch command tool 31 adds a row to orders table 168 and writes the attributes of the "insert_order" batch command in the appropriate columns. Batch command tool 31 adds a row in an order_item table 169 according to "insert_order_item" batch command and writes the attributes of the "insert_order_item" batch command in the appropriate columns. Insert_order_item table 169 is cross-referenced to insert_order table 168 by the "order_number" and to the publications by the "order_sku".

Batch command tool 31 adds a row in an "order_sku" table 170 according to an "insert_sku" batch command and writes the attributes of "insert_sku" batch command in the appropriate columns. Batch command tool 31 adds a row in a customer_content table 171 according to an "insert_pmatter" batch command and writes the attributes of "insert_pmatter" batch command in the appropriate columns. If the personalized content is less or equal to, e.g., 4000 characters, the personalized content is stored in the "short_text" column of "customer_content" table 171. If the personalized content is greater than, e.g., 4000 characters, the personalized content is stored in the "long_text" column of customer_content table 171.

Action 204 (FIG. 12) is followed by action 206. In action 206, assembler 34 constitutes a publication according to purchase order 19. In one implementation, prior to constituting the publication, assembler 34, queries a contract_right_restrictions table 183 or rights_restrictions table 184 in rights and royalty database 38 to determine if an output form selected by the customer is permitted by the contract between the respective author and publishing system 2.

To manufacture a publication, assembler 34 first determines the order from order table 168. Using the "order_number", assembler 34 determines the order item from order_item table 169. Using the "order_sku", assembler 34 determines the unique combination of publications, personalized contents, and styles from order_sku table 170. Using the optional "pmatter", assembler 34 determines the personalized content from customer_content table 171. Using the "style_sheet_ID", assembler 34 determines the stylesheet from a style_sheet_LK table 172. Using the "pub_id", assembler 34 locates the content and descriptors in asset table 164, iu_tag table 165, and iu_attribute table 167.

In one implementation, assembler 34 combines a publication and personalized contents according to a method 50A (FIG. 14). In an initial action 51, assembler 34 constructs a list ("start list") of XML tags with the same "pub_id" sorted by ascending starting offset of their contents. Assembler 34 also constructs a list ("end list") of XML tags with the same "pub_id" sorted by ascending ending offset of their contents. Assembler 34 retrieves XML tags with the same "pub_id" from iu_tag table 165 (FIG. 11) by querying all XML tags with the "pub_id". Action 51 is followed by action 54. Action 51 is performed by software shown from the top half of p. 3 in file Content.sqlj of Appendix E.

In action 54, assembler 34 determines if a starting offset of the "current start tag" (defined below) is less than an ending offset of the "current end tag" (defined below). If the current starting offset is less than the current ending offset, action 54 is followed by action 55A. Otherwise, action 54 is followed by action 58. Action 54 is performed by software shown from the top of p. 5 in file Content.sqlj of Appendix E.

In the first iteration, the current start tag is the tag at the beginning of the start list and the current end tag is the tag at the beginning of the end list. In each subsequent iteration, assembler 34 advances down the start list and/or the end list and new tags become the current start tag and the current end tag. The starting offset of the current start tag is referred to as the "current starting offset" and the ending offset of the current end tag is hereafter referred to as the "current ending offset". The current start tag and the current end tag from the previous iteration are referred to as "previous start tag" and "previous end tag". The starting offset of the previous start tag is referred to as the "previous starting offset" and the ending offset of the previous end tag is referred to as the "previous ending offset". In the first iteration, where there is no previous starting offset or previous ending offset, the values of previous starting offset and previous ending offset are set to zero.

In action 55A, assembler 34 outputs the content between (1) the minimum of (a) the previous starting offset and (b) the previous ending offset and (2) the minimum of (a) the current starting offset and (b) the current ending offset. In other words, assembler 34 outputs the content between the following offsets:
(1) min (previous starting offset, previous ending offset); and
(2) min (current starting offset, current ending offset).

Assembler 34 outputs the content to an XML file. Assembler 34 retrieves the content from "asset_blob" field of asset table 164 (FIG. 11) using the "pub_id" of the publication. Action 55A is followed by action 56. Action 55A is performed by software shown from the top half of p. 5 in file Content.sqlj of Appendix E.

In action 56, assembler 34 outputs the current start tag along with its attributes and attribute values to the XML document. Assembler 34 retrieves attributes and attribute values of the XML tag from iu_tag table 165 and iu_attribute table 167 (FIG. 11) using the "iu_tag_ID". Action 56 is followed by action 57. Action 56 is performed by software shown from the top half of p. 5 in file Content.sqlj of Appendix E. In action 57, assembler 34 advances to the next start tag on the start list. Action 57 is followed by action 54. Action 57 is performed by software shown from bottom half of p. 5 in file Content.sqlj of Appendix E.

In action 58, assembler 34 determines if the current starting offset is equal to the current ending offset. If the current starting offset is equal to the current ending offset, action 58 is followed by action 59. Otherwise, action 58 is followed by action 61. Action 58 is performed by software shown at the bottom of p. 5 in file Content.sqlj of Appendix E. In action 59, assembler 34 outputs the current start and end tags to the XML document. Action 59 is followed by action 60. In one implementation, assembler 34 outputs a shortcut of"<TAG_NAME +/>" instead of both the current start and end tags. Action 59 is performed by software shown at the bottom of p. 5 in file Content.sqlj of Appendix E. In action 60, assembler 34 advances to the next start and end tags in the start and end lists. Action 60 is followed by action 54. Action 60 is performed by software shown from the middle of p. 6 in file Content.sqlj of Appendix E.

In action 61, assembler 34 determines if the current starting offset is greater than the current ending offset. If the current starting offset is greater than the current ending offset, action 61 is followed by action 62B. Otherwise, action 61 is followed by action 67. Action 61 is performed by software shown at the bottom of p. 3 in file Content.sqlj of Appendix E. In action 62A, assembler 34 outputs the content between the following offsets:
(1) min (previous starting offset, previous ending offset); and
(2) min (current starting offset, current ending offset).

Action 62A is identical to the previous described action 55A. Action 62A is followed by action 63. Action 62A is performed by software shown at the bottom of p. 5 in file Content.sqlj of Appendix E. In action 63, assembler 34 outputs current end tag to the XML document. Action 63 is followed by action 64. Action 63 is performed by software shown from the top half of p. 4 in file Content.sqlj of Appendix E.

In action 64, assembler 34 determines if the current end tag is a "target tag." A target tag is a tag that signifies the insertion point of personalized content 20. For example, personalized content 20 is a dedication that comes after the title. Thus, the target tag is the end tag of the title tag. Action 64 is performed by software shown at the bottom of p. 4 in file Content.sqlj of Appendix E. In one implementation, target tag is programmed into the codes of assembler 34. Alternatively, target tag may be set in a table that assembler 34 refers to when constituting the publication. If the current end tag is the target tag, action 64 is followed by action 65. Otherwise, action 64 is followed by action 66. In action 65, assembler 34 outputs the personalized content between personalized content tags. Assembler 34 retrieves personalized content 20 from customer_content table 171 (FIG. 11) by the "order_sku." Action 65 is followed by action 66. Action 65 is performed by software shown at the bottom of p. 4 in file Content.sqlj of Appendix E.

In action 66, assembler 34 advances to the next end tag. In action 67, assembler 34 ends method 50. Assembler 34 reaches action 67 when all tags have been examined and the XML document is completed. Action 66 is performed by software shown at the middle of p. 6 in file Content.sqlj of Appendix E. In one implementation, assembler 34 updates the "order_status_code" in orders table 168 to indicate that the order was filled. Appendix E contains exemplary source codes for assembler 34 described above.

In one implementation, assembler 34 constitutes a new publication from two or more publications. In this implementation, a stored procedure in eCommerce database 23 transmits an XML batch command that contains the "pub_id" of each publication and the order that the publications are to be combined. Assembler 34 constitutes a first publication in an XML document using the above-described method 50A. After completing the first publication, assembler 34 constitutes the second publication immediately following the end of the first publication in the same XML document using the above-described method 50A. The process is repeated in the order and for the publications the customer wishes to combine.

In one implementation, assembler 34 manufacturers a personalized publication from a portion of another publication and personalized contents according to a method 50B (FIG. 15). Assembler 34 may manufacture a publication from a portion of another publication when the contract between the respective author and operator of publishing system 2 allows for the distribution or sales of his or her publication in part. Assembler 34, for example, queries a contract_rights_restriction table 183 in rights and royalty database 38 to determine if a publication can be distributed or sold in part.

In one variation, where the sections of the publications are identified in separate entries in pub_block_comp table 163, assembler 34 inserts paragraph numbers at the beginning of each paragraph. A PDF file of the publication is displayed to the customer in a viewing area 406 on a web page from catalog web pages 22 (FIG. 20). When the customer sees a paragraph he wishes to purchase, he or she enters the paragraph number in a field 407. Once the customer has finished viewing this publication, he or she can select a button 408 to add the selected paragraphs to a customized book. The paragraph numbers identifies the entries in pub_block_comp table 163 that the customer wishes to buy. During assembling, assembler 34 queries pub_block_comp table 163 for the starting and ending offsets of each of the selected paragraphs and assembles these sections according to method 50B (FIG. 15). The starting offset of the selected paragraph is referred to as the "start of selection" and the ending offset of the selected paragraph is referred to as the "end of selection".

In an initial action 52, assembler 34 constructs a start list of tags with the following offsets:
(1) (starting offset < start of selection) and (ending offset > start of selection); or
(2) (starting offset < start of selection) and (starting offset < end of selection).

Action 52 is followed by action 53. In action 53, assembler 34 constructs an end list of tags with the following offsets:
(1) (starting offset < end of selection) and (ending offset > end of selection); or
(2) (ending offset > start of selection) and (ending offset < end of selection).

Action 53 is followed by the previously described action 54. The other actions are unchanged from method 50A except for actions 55A and 62A, which are respectively replaced with actions 55B and 62B.

In action 55B, assembler 34 outputs the content between the following two offsets:
(1) max (min (previous starting offset, previous ending offset), start of selection); and
(2) min (min (current starting offset, current ending offset), end of selection).

Action 62B is identical to the just-described action 55B. Assembler 34 repeats method 50B until all of the selected paragraphs have been output to the XML file.

In one implementation, assembler 34 combines two or more publications to form a new publication. In this implementation, a stored procedure in eCommerce database 23 transmits an XML batch command that contains the "pub_id" of each publication, the start and end of selection for each publication, and the order that the publications are to be combined. Assembler 34 constitutes a first publication in an XML document using the above-described method 50B. After completing the first publication, assembler 34 constitutes the second publication immediately following the end of the first publication in the same XML document using the above-described method 50B. The process is repeated in the order and for the publications the customer wishes to combine.

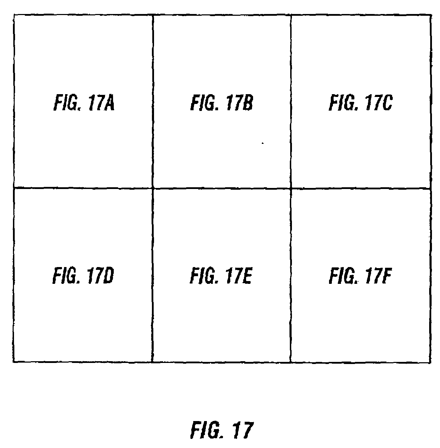

Action 300 (FIG. 16) includes action 301 to 304. In action 301, translator 64 saves the publication in an XML format according to XSL stylesheets 39. Action 301 is followed by action 302. In action 302, converters 35 format the publication according to stylesheets 36 and save the publication in one of multiple file formats. The file format depends on the output form chosen by the customer. For example, if the customer wants a paperback book, converters 35 save the publication as a PDF file so that commercial printer 9A can print the paperback book. If the customer wants an eBook, converters 35 save the publication as an eBook file. Action 302 is followed by action 303. In action 303, outputter 37 transmits the publication to a customer computer (e.g., customer computer 8A or 8B), a commercial printer (e.g., commercial print 9A or 9B), or an electronic bookstore (e.g., electronic bookstore 65) depending on the output form. Action 303 is followed by action 304. In action 304, the customer receives the publication in one of multiple output forms.

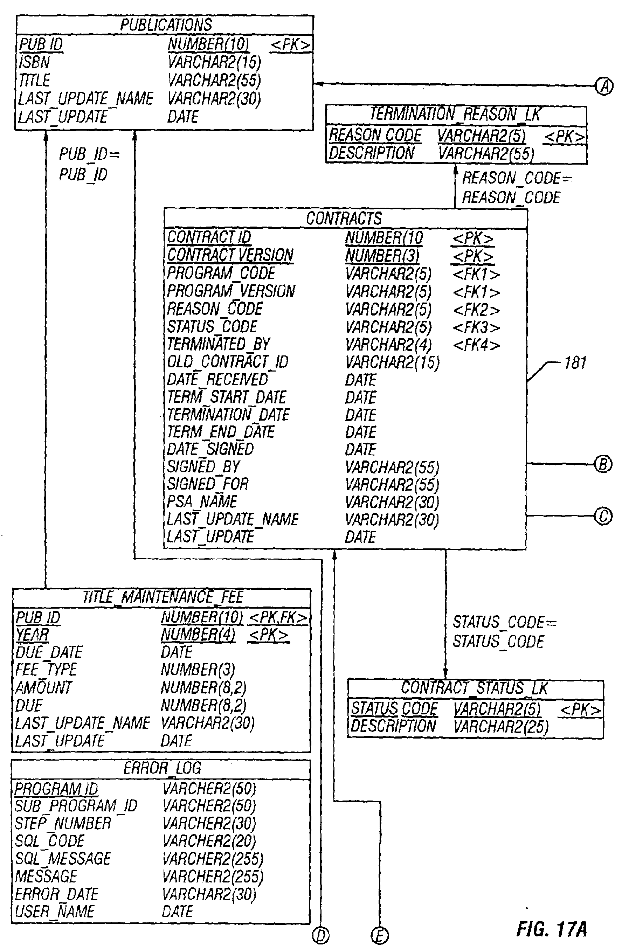

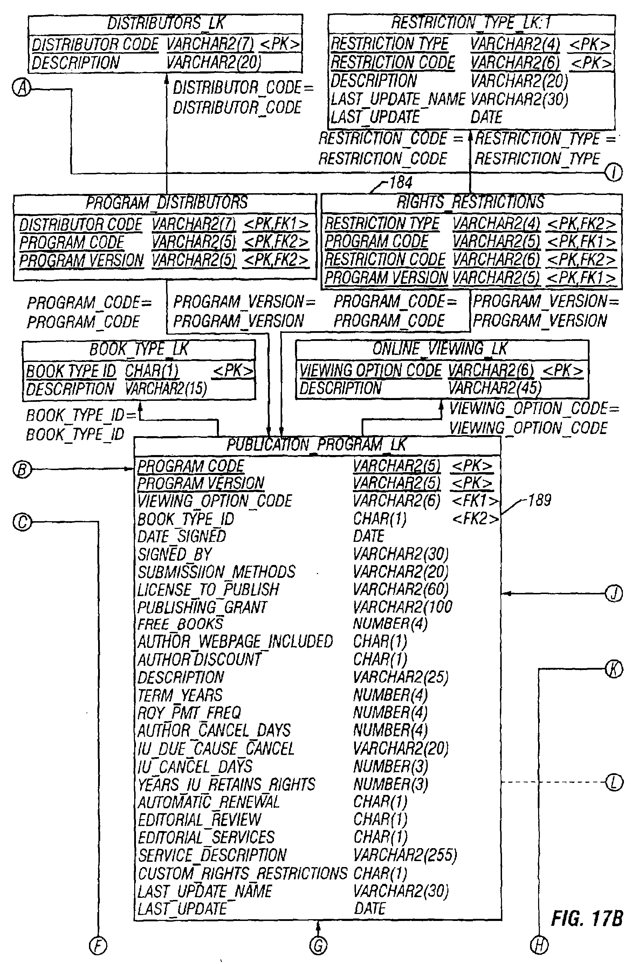

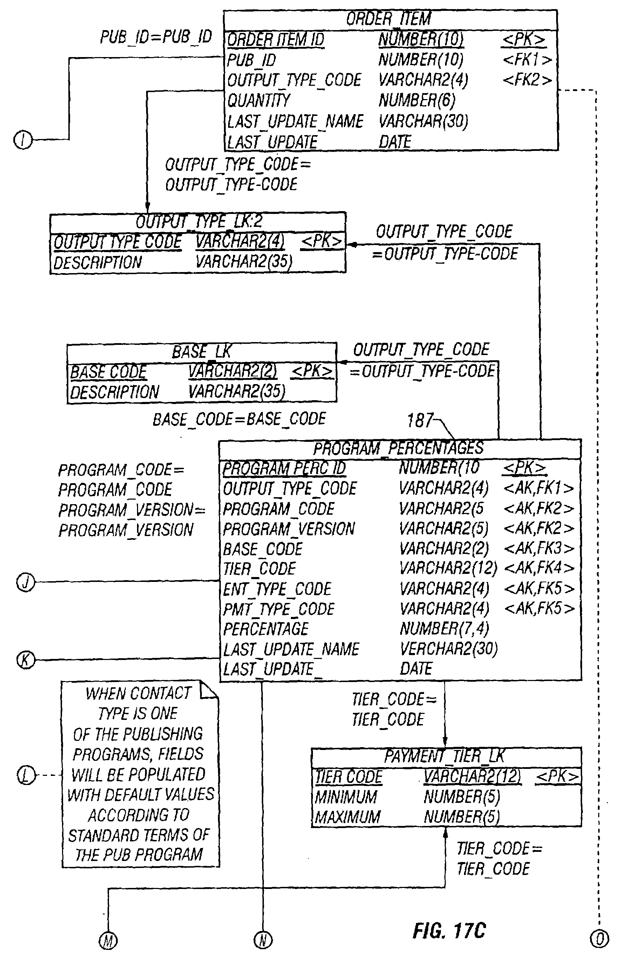

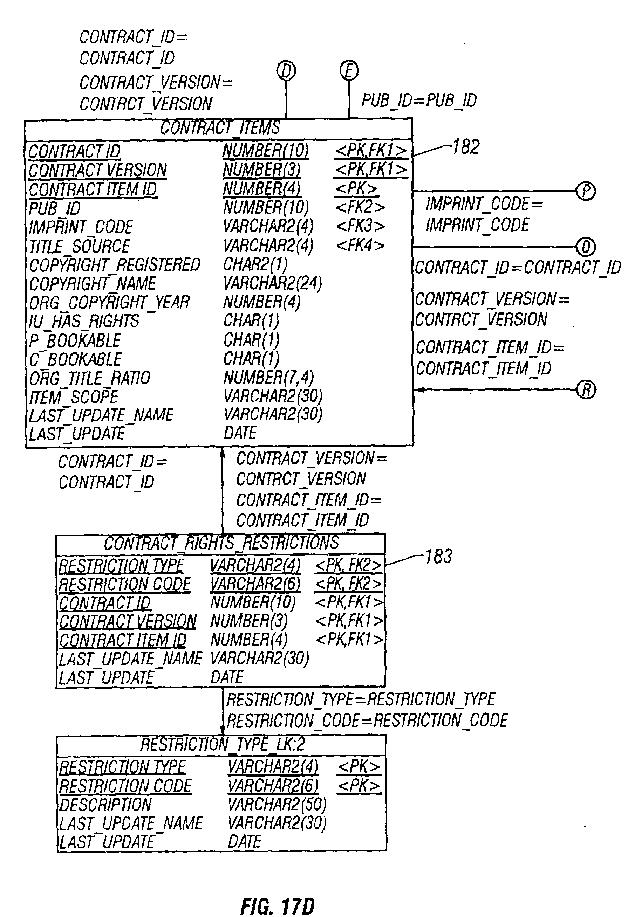

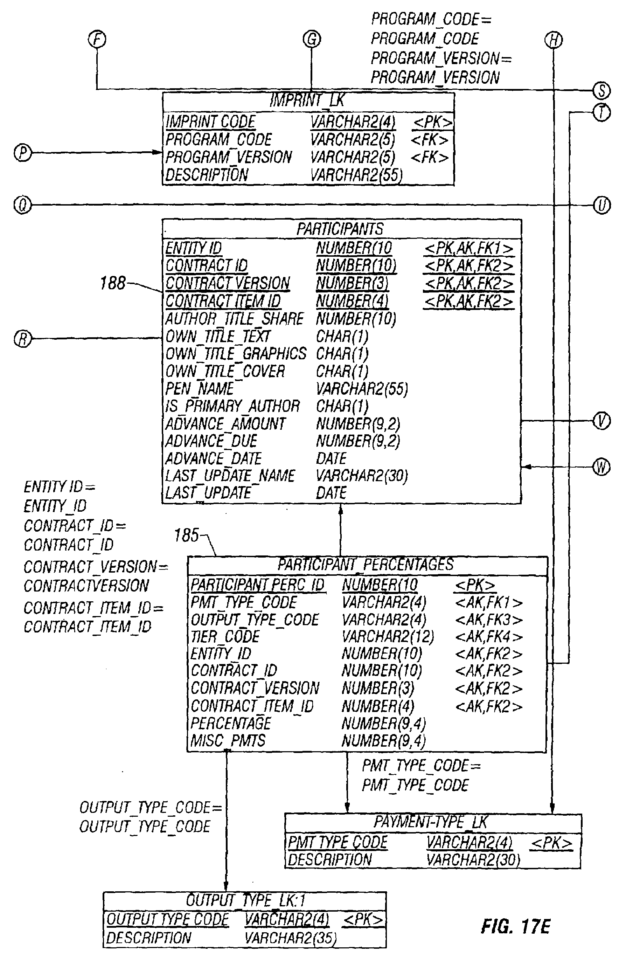

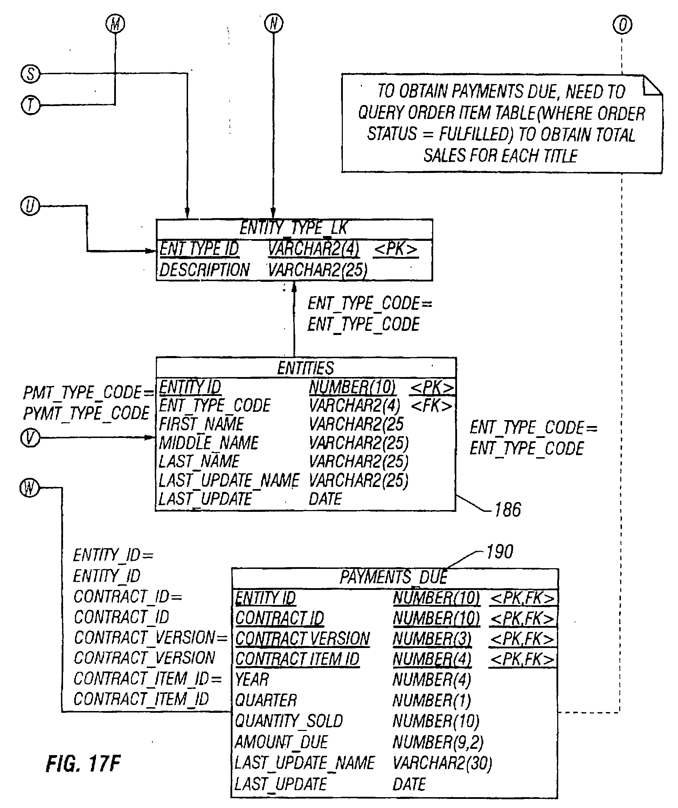

During submission, eCommerce system also transmits an XML batch command file that provides the rights and royalty information of the author. Data model 180 (FIG. 17) illustrates the tables of rights and royalty database 38 used to store the rights and royalty information. A contract table 181 contains the master record for a contract between the author and the operator of publishing system 2. Contract table 181 includes elements of "contract_id" "contract_version", "program_code", and other conventional contract information. "Contract_id" is an identifier of a contract and "contract_version" is an identifier of the version of the contract. "Program_code" is an identifier of a writing program in a publication_program_lk table 189 that the contract is a part of. Each writing program provides different terms, costs, and services to the authors. For example, a writing program has high costs because it provides editorial services and provides high royalty rates to the author. In response to an "insert_contract" XML batch command, XML batch command tool 31 adds a row to contract table 181 and inserts the attributes of the "insert_contract" batch command in the appropriate columns.

A contract_items table 182 contains the master record of an item under the contract between the author and the operator of publishing system 2. The item may be a publication or a component (e.g., a section) of a publication. Contract_items table 182 includes elements of "contract_id", "contract_version", "contract_item_id", "pub_id" or "pub_comp_id", "p_bookable", "c_bookable", and "org_title_ratio". "Contract_item_id" is an identifier of the item under the contract. In one implementation, where the item is a publication, "pub_iD" identifies a publication from publication table 161. In another implementation, where the item is a section of the publication, "pub_comp_id" identifies a component of the publication in pub_block_comp table 163. "P_bookable" is a flag indicating whether the contract item may be made part of a personalized book and "c_bookable" is a flag indicating whether the contract item may be made part of a customized book.

"Org_title_ratio" identifies how much a contract item accounts for the royalty of a publication. For example, the author believes the contract item is a crucial chapter in a book that accounts for 75% of the overall royalty stemming from the book. If the author allows the crucial chapter to be made part of a customized book, the author wishes to receive a royalty that is 75% of the royalty he or she would have gotten from the sale of the entire book, where 75% is the "org_title_ratio". In response to an "insert_contract_item" XML batch command, XML batch command tool 31 adds a row to contract table 181 and inserts the attributes of the "insert_contract" batch command in the appropriate columns.

A contract_rights_restrictions table 183 contains customized restrictions on the distribution and sales of the publication selected by the author. Contract_rights_restrictions table 183 includes elements of "restriction_type", "restriction_code", "contract_id", "contract_version", and "contract_item_id". "Restriction_type" is an identifier of the type of restriction imposed on the publication, such as language, geographic, and output form. "Restriction_code" is an identifier of the various subtypes of restrictions within each type of restriction. For example, "restriction_type" and "restriction_code" combine to form a restriction for sales of an English version of a publication in California in electronic form.

A publication_program_lk table 189 contains conventional information regarding each publication program that the author can participate, including the elements of "program_code" and "program_version". A rights_restrictions table 184 contains the default rights restrictions in each writing program of publication_program_lk table 189.

A program_percentage table 187 contains the records for various royalty programs for each entity entitled to payment from the sales of the publication. Program_percentage table 187 includes the elements of "program_perc_id", "program_code", "program_version", "base_code", "tier_code", "ent_type_code", "pmt_type_code", and "percentage". "Program_perc_id" is an identifier of this royalty program. "Program_code" and "program_version" are used to identify this royalty program to a writing program. "Base_code" and "tier_code" are used as part of a stepped royalty program where the author is guaranteed a base royalty percentage identified by the "Base_code" and increased royalty once sales reaches volumes specified in the "Tier_code". "Ent_type_code" identifies the entity to be paid according to this royalty program. Entities include author, literary agent, promoters, and publishers.

A participants table 188 contains the records for each entity that must be paid for a contract item. Participants table 188 includes the elements of "entity_ID", "contract_ID", "contract_version", "contract_item_id", and "author_title_share". "Entity_ID", "contract_ID", "contract_version", and "contract_item_id", are used to determine the contract item in contract_items table 182. "Author_title_share" is the percentage that the entity is to get from the royalty specified in program_percentage table 187. "Author_title_share" is 100 percent if the entity does not have to share the royalty specified in program_percentage table 187 from other entities.

A payment_due table 190 contains the records of the payments due to an entity for the sales of a contract item. Payment_due table includes the elements of "entity_ID", "contract_ID", "contract_version", "contract_item_id", "year", "quarter", "quantity_sold", and "amount_due". "Entity_ID", "contract_ID", "contract_version", and "contract_item_id" are used to identify the contract item that the entity is paid for.

FIG. 21 illustrates one way which the author can delineate the royalty rates on each section of his or her submission. During creation of submission 11, the author uses a special tag which delineates the sections that can be purchase separately. On a submission page 28J (FIG. 21), the author enters the royalty rates for each of the sections, which adds up to 100% of the royalty rate.

Numerous modifications and adaptations of the embodiments described herein will be apparent to the skilled artisan in view of the disclosure. For example, content management system 5 can include a converter that converts textual content to audio (e.g., speech) and output the audio in a format for display through a speaker. Such converts allows publishing system 2 to display the stored content in existing and future display media.

## Claims

1. A method for publishing information, the method comprising:
- receiving information;
- receiving an order for display of said information; and
- preparing said information for display via a display medium depending on the order.

2. The method of claim 1, wherein the order is for a purchase of said information.

3. The method of claim 2, wherein said display medium includes a monitor and said method further comprises displaying said information in said monitor.

4. The method of claim 2, wherein said display medium includes a speaker and said method further comprises playing said information on said speaker. removing at least one of said additional codes from said information.

5. The method of claim 2, wherein said display medium includes a printer and said method further comprises printing said information via said printer.

6. The method of claim 5, wherein said printer is a commercial printer and said method further comprises binding a book containing pages generated by said commercial printer.

7. The method of claim 1, wherein said preparing comprises preparing said first information into a format acceptable to a commercial printer in response to said receiving.

8. The method of claim 7, further comprising printing said information.

9. A method of claim 1, wherein said preparing comprises, after receiving the order, inserting within the information a plurality of format codes of a display medium, said display medium depending on the order, said plurality of format codes including a first code to be used in display of a first portion of said information and a second code to be used in display of a second portion of said first information.

10. The method of claim 9, wherein said order identifies a second information, and said method further includes:
inserting said second information into a position between said first portion and
said second portion of said first information.

11. The method of claim 10, wherein said first information includes only a portion of a literary work.

12. The method of claim 11, wherein said literary work is a book and said first information consists essentially of a chapter in said book.

13. The method of claim 10 wherein:
said first information includes text; and
said second information includes graphics.

14. The method of claim 10, wherein said second information includes a dedication.

15. The method of claim 10, wherein:
said first information consists essentially of a chapter in a first book; and
said second information consists essentially of a chapter in a second book.

16. The method of claim 10, wherein:
said first information consists essentially of an article in a first periodical; and
said second information consists essentially of an article in a second periodical.

17. A method to distribute publications, comprising:
receiving first information;
receiving second information;
receiving an order to purchase at least a portion of the first information combined with at least a portion of the second information;
combining said portions to form third information; and
transmitting said third information over a network.

18. The method of claim 17, wherein said order identifies a file format of said third information.

19. The method of claim 17, wherein said first information and said second information are in a different file format from said third information

20. The method of claim 17, wherein said first information is in a different file format than said second information

21. The method of claim 17, wherein said distributing comprises transmitting over a network to a customer.

22. The method of claim 17, wherein said distributing comprises transmitting over a network the third information to a channel distribution.

23. The method of claim 22, wherein the channel of distribution includes at least one of commercial printer and an electronic bookstore.

24. The method of claim 17, wherein the first information comprises a first content and at least a first code, and the second information comprises a second content and at least a second code, the method further comprising the acts of:
saving separately the first content and the first code; and
saving separately the second content and the second code.

25. The method of claim 24, wherein the first code is an XML tag.

26. The method of claim 24, further comprising the act of replacing the first code with a third code prior to said transmitting, wherein the third code conforms to the third file format.

27. The method of claim 26, wherein said replacing comprises performing an instruction from a file to replace the first code with the third code.

28. The method of claim 27, wherein said file is a style sheet.

29. The method of claim 18, further comprising the act of:
receiving a contract including a royalty rate and a restriction on the distribution for one of the first information and the second information.

30. The method of claim 39, further comprising the act of determining if the first information is permitted to be combined with the second information according to the restriction.

31. The method of claim 30, wherein the royalty rate is for the distribution of at least a portion of the first information.

32. The method of claim 19, further comprising transmitting a bill for said purchase.

33. The method of claim 32, further comprising calculating a royalty payment from a royalty rate for at least one of said portions.

34. The method of claim 33, wherein said calculating including multiplying the royalty rate with a number of copies to be prepared from said third information.

35. The method of claim 33, further comprising transmitting said royalty payment to an author.

36. The method of claim 17, wherein the first information and the second information include at least one of: manuscripts, dedications, forwards, bookplates, reviews, commentary, book covers, illustrations, and photos.

37. A computer system comprising:
a first database having stored therein:
a submission comprising:
at least one content; and
at least one descriptor;
a second database having stored therein:
a royalty rate for at least a portion of said submission.

38. The system of claim 37, wherein said content is a string of text.

39. The system of claim 37, wherein said personalized content includes at least one of a dedications, foreword, preface, bookplate, review, and commentary.

40. The system of claim 37, wherein said second database further stores a restriction on distribution or sales of a submission.

41. The system of claim 40, wherein said restriction includes language, geographic, and output form restrictions.

42. The system of claim 40, wherein said restriction prevents said submission from being combined with another submission.

43. The system of claim 40, wherein said restriction prevents said submission from being combined with a personalized content.

44. The system of claim 37, wherein said first database further stores at least one stylesheet to format said submission for display in one or more print media or electronic media.

45. The system of claim 37, wherein said first database further stores a date when said content is available for distribution.

46. The system of claim 37, wherein said content stores at least one of: an image, a sound, and a video.
